# EUROPÄISCHE PATENTANMELDUNG

(11) **EP 1 120 161 A1**
(43) Veröffentlichungstag der Anmeldung: **01.08.2001**
(21) Anmeldenummer: 00127626.0
(22) Anmeldetag: 16.12.2000
(51) Int. Cl.: B01J 31/16, C07B 31/00, C08F 8/00

(54) **Molekulargewichtsgrösserte Liganden für asymetrische homogenlösliche Hydrierkatalysatoren, Verfahren zu deren Herstellung und Verwendung**

(30) Priorität: 24.01.2000 DE 10002976
(71) Anmelder: Degussa AG, 40474 Düsseldorf (DE)
(72) Erfinder: Krimmer, Hans-Peter, Dr., 63128 Dietzenbach (DE); Wöltinger, Jens, Dr., 63456 Hanau (DE); Burkhardt, Olaf, Dr., 2920 Kalmthout (DE); Klement, Ingo, Dr., 35415 Pohlheim-Garbeinteich (DE); Henniges, Hans, Dr., 53111 Bonn (DE); Drauz, Karlheinz, Prof., 63579 Freigericht (DE); Bommarius, Andreas, Dr., 30327 Atlanta, GA (US); Philippe, Jean-Louis, Dr., 63303 Dreieich (DE); Karau, Andreas, Dr., 67434 Neustad (DE)

(57) **Zusammenfassung**

Die Erfindung richtet sich auf molekulargewichtsvergrößerte homogen lösliche Liganden für Hydrierkatalysatoren aufweisend homochirale aktive Zentren, wobei spezielle Linker zwischen aktivem Zentrum und Polymergerüst eingefügt sein können.

Die Liganden können in Katalysatoren überführt vorteilhaft in Membranreaktoren in quasikontinuierlichen oder kontinuierlichen organischen Synthesen eingesetzt werden.

Verfahren und Verwendung, Katalysatoren.

## Beschreibung

Die vorliegende Erfindung betrifft molekulargewichtsvergrößerte Liganden für Katalysatoren für die asymmetrische homogene Hydrierung von Doppelbindungen.

Derartige katalytisch wirksame Spezies sind für industrielle Synthesen von organischen Substanzen äußerst vorteilhaft, da sie aufgrund ihrer verbesserten Recyclierbarkeit helfen, Herstellungskosten für synthetisch gefertigte Produkte niedrig zu halten.

Molekulargewichtsvergrößerte Katalysatoren zur homogenen enantioselektiven Hydrierung sind aus dem Stand der Technik bereits bekannt. In der J. Am. Chem. Soc. 1998, 120, 9481f. wird auf das Problem eingegangen, lösliche Molekulargewichtsvergrößerungen für u.a. Hydrierkatalysatoren herzustellen. Auch Wandrey et al. berichteten über einen Einsatz eines molekulargewichtsvergrößerten Hydrierkatalysators in einem Membranreaktor (Angew. Chem. 1990, 102, 445f.). In der US 5,777,062 werden homogen lösliche polymervergrößerte Liganden für Hydrierkatalysatoren angegeben. Die monomeren Liganden sind dabei über Urethan- oder Harnstoff-Linker an das Polymerbackbone gebunden.

Bis heute sind für den Einsatz derartiger Katalysatoren noch nicht alle Probleme ausreichend behoben, weshalb immer noch ein Bedarf an neuen Katalysatorsystemen herrscht, die es ermöglichen kontinuierliche Prozesse katalytisch durchzuführen. So hat man mit Problemen wie z.B. Abtrennbarkeit von Produkt vom Katalysator im Hinblick auf die eingesetzte Membran sowie der Inaktivierung des Katalysators mit Fortdauer der Reaktion zu kämpfen.

Aufgabe der vorliegenden Erfindung war es weitere Liganden für Katalysatoren für den oben angegebenen Zweck bereitzustellen.

Diese Aufgabe wird durch Liganden für Katalysatoren mit den Merkmalen des Anspruchs 1 gelöst. Ansprüche 2-5 sind auf bestimmte bevorzugte Ausführungsformen der Liganden gerichtet. Anspruch 6 beschreibt bevorzugte Herstellverfahren und Ansprüche 7-9 vorteilhafte Verwendungen der Liganden. Anspruch 10 ist auf spezielle Katalysatoren gerichtet.

Dadurch, daß man molekulargewichtsvergrößerte homogen lösliche Liganden bereitstellt, welche homochirale aktive Zentren ausgewählt aus der Gruppe

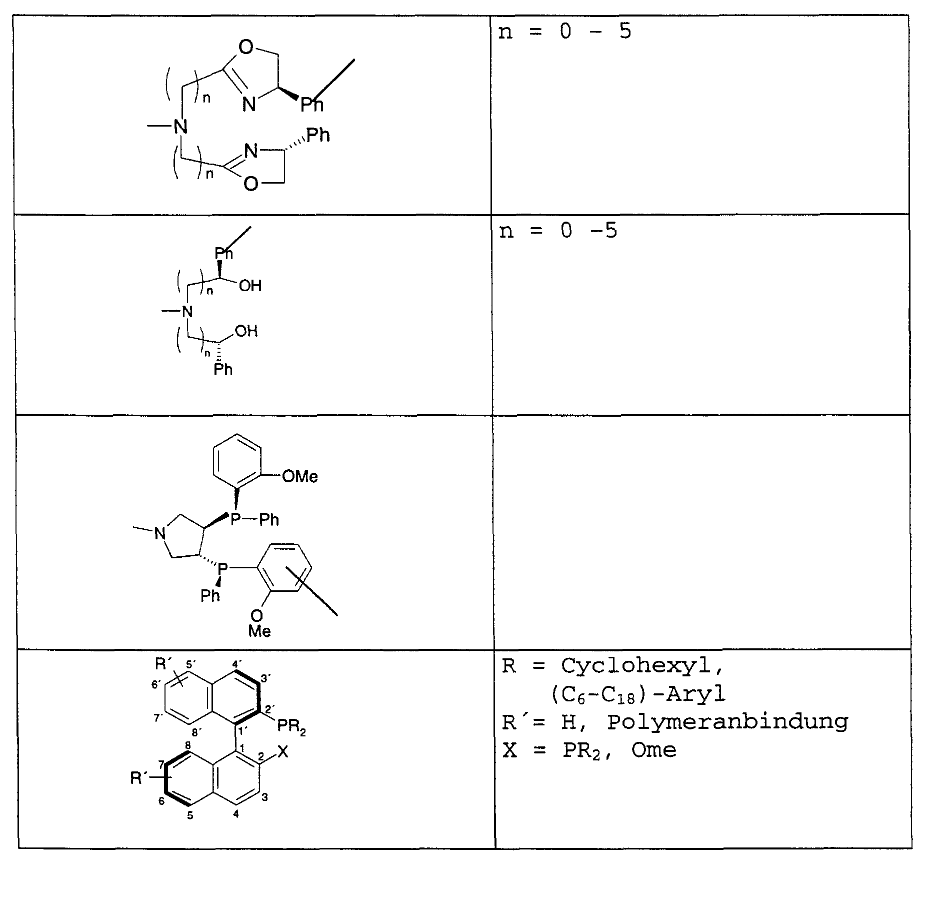

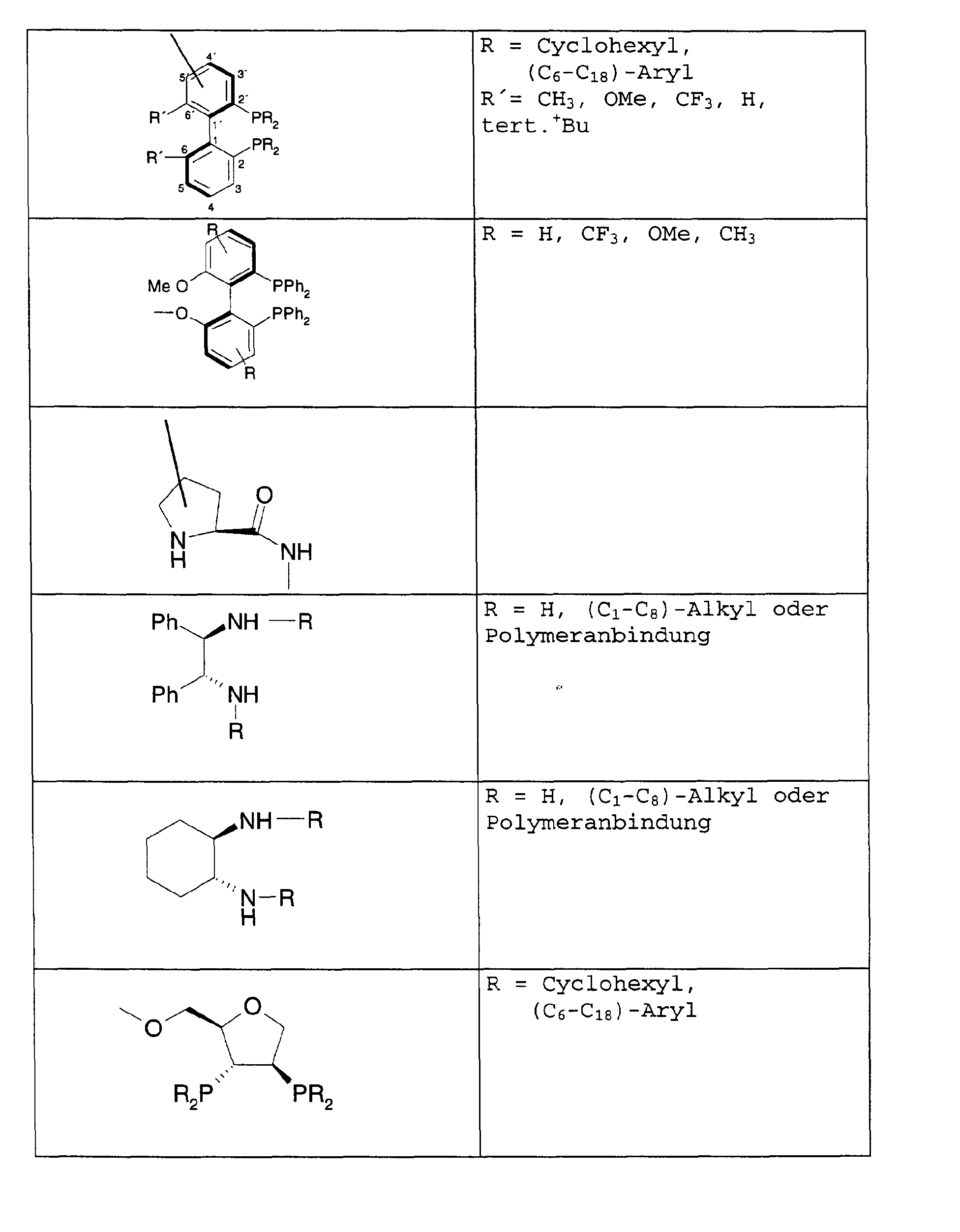

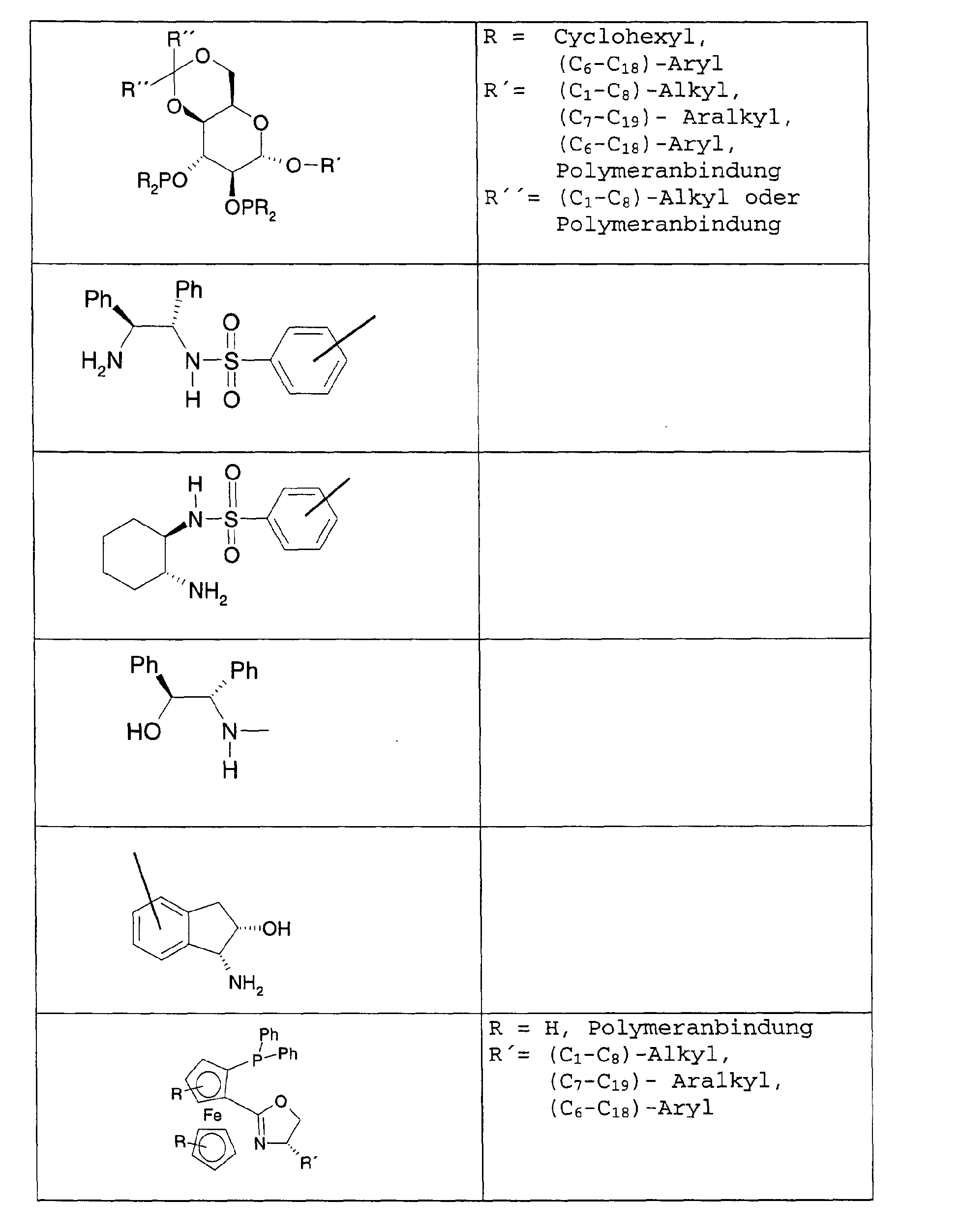

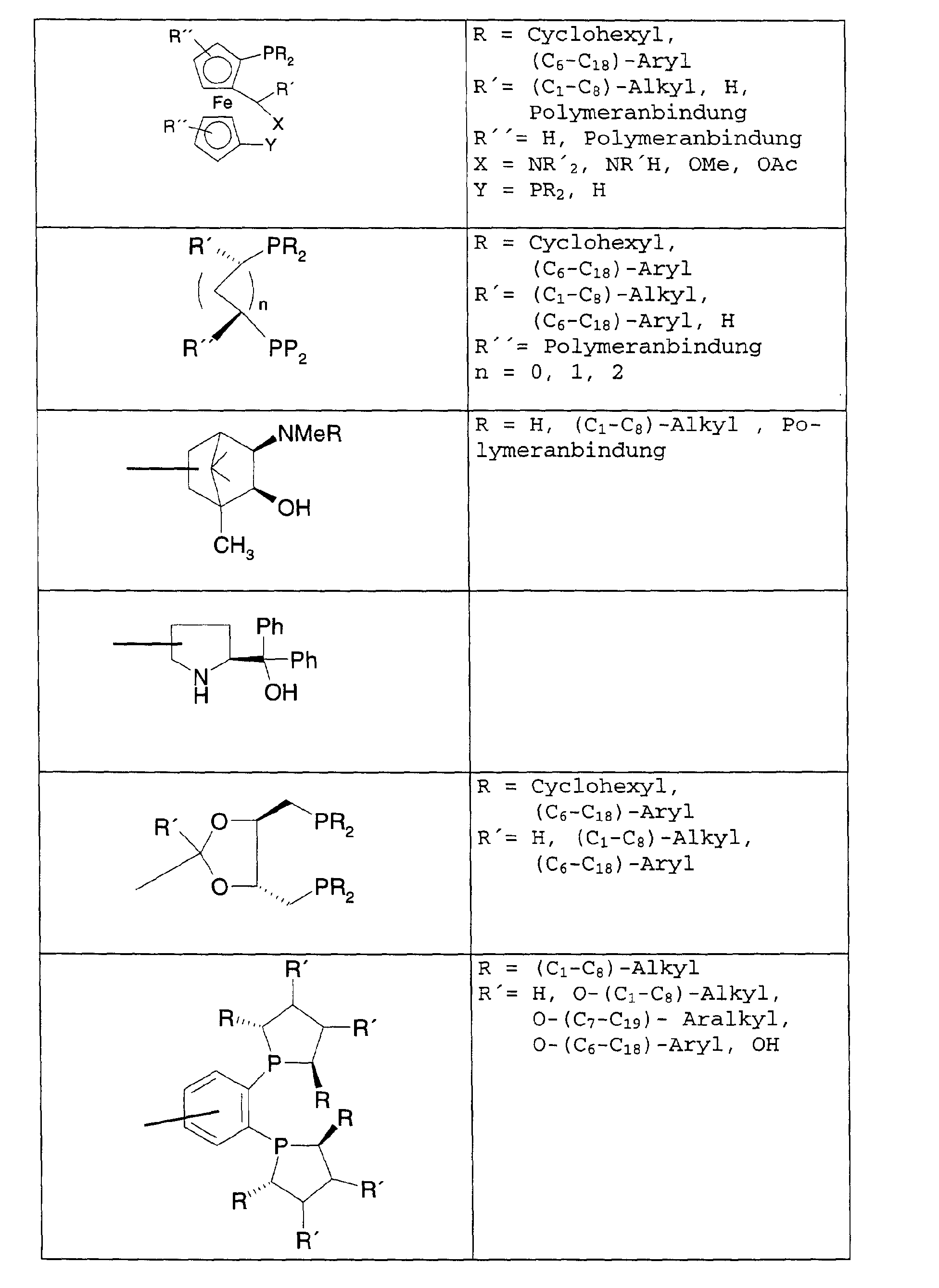

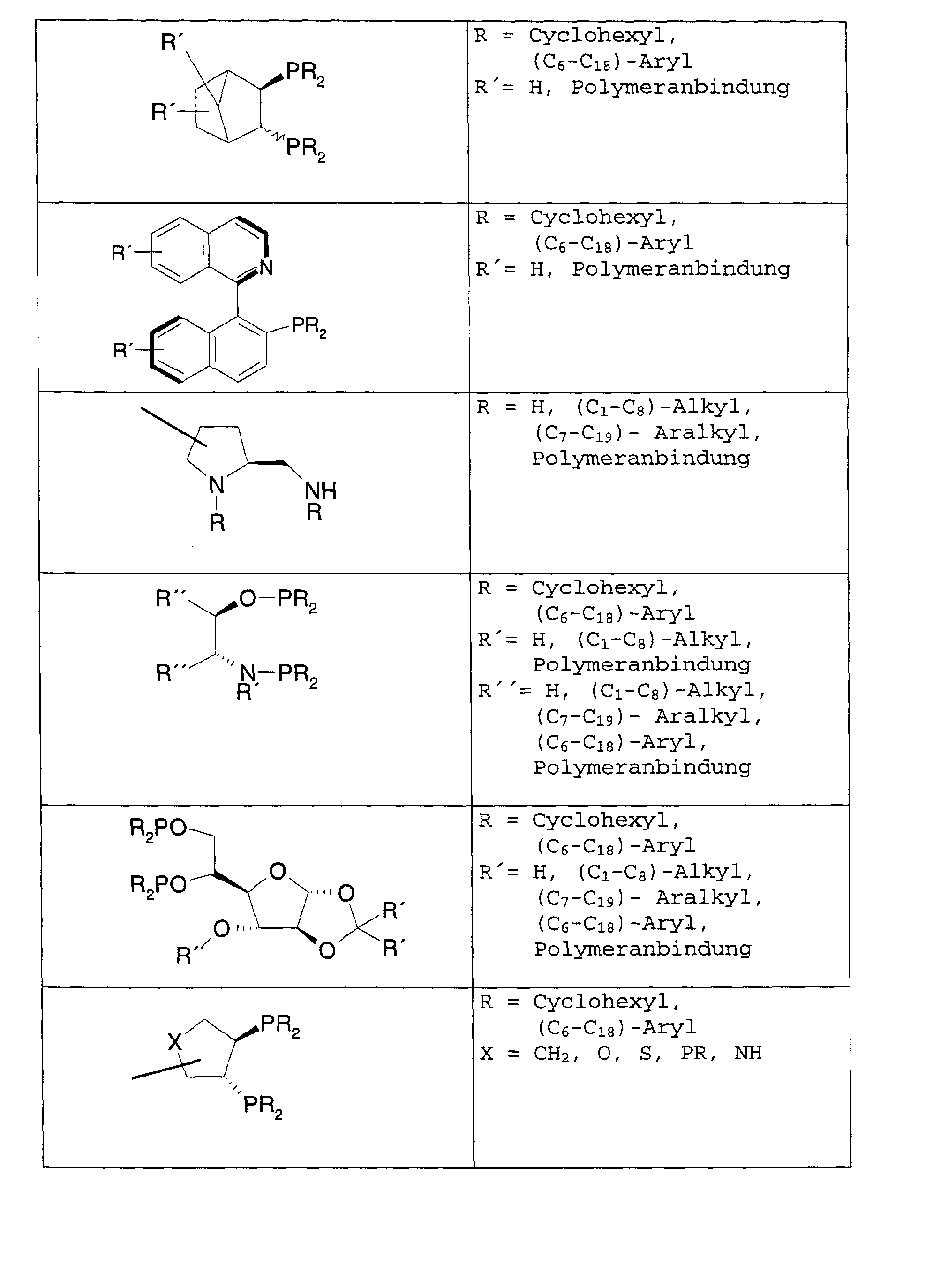

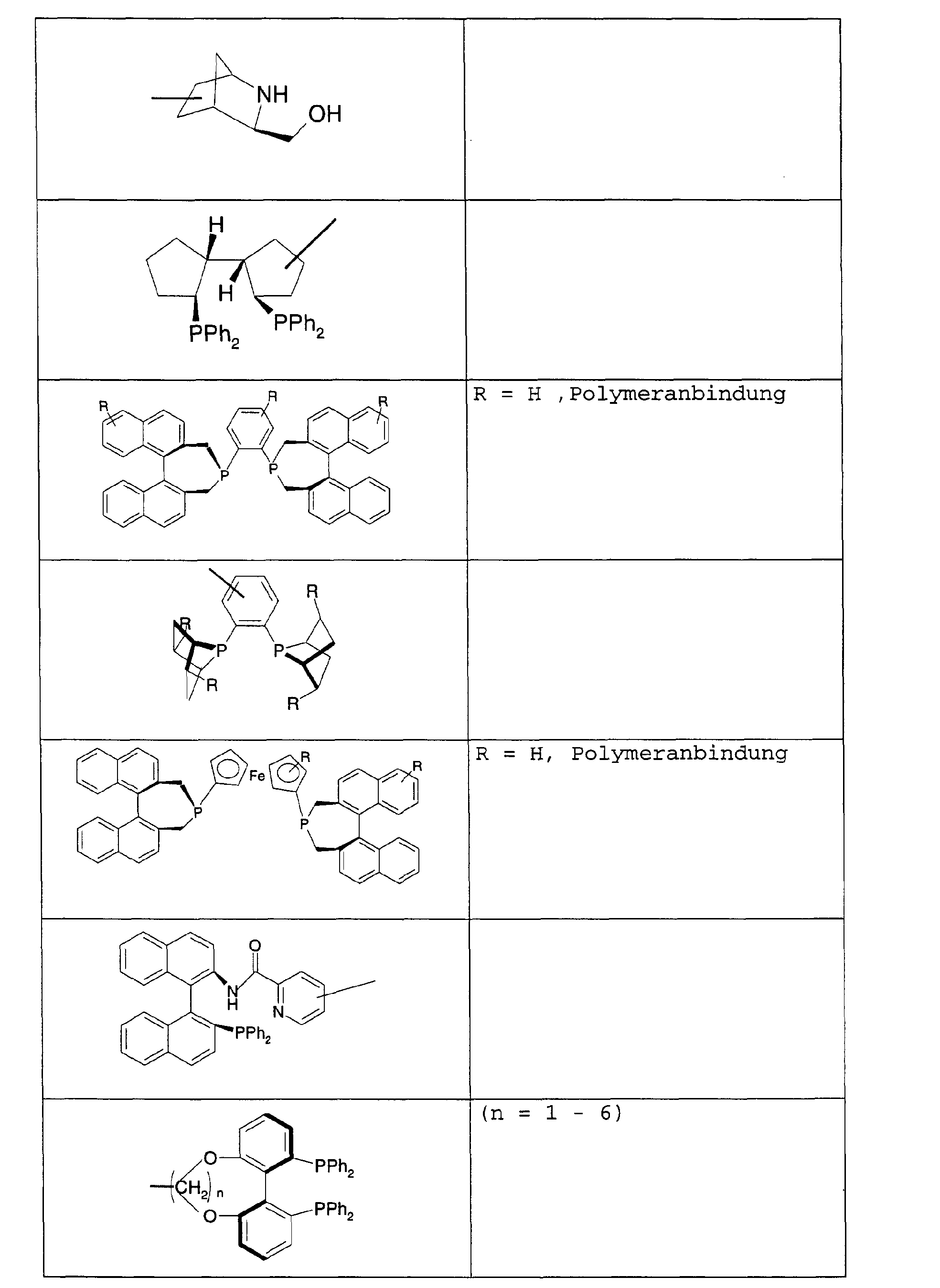

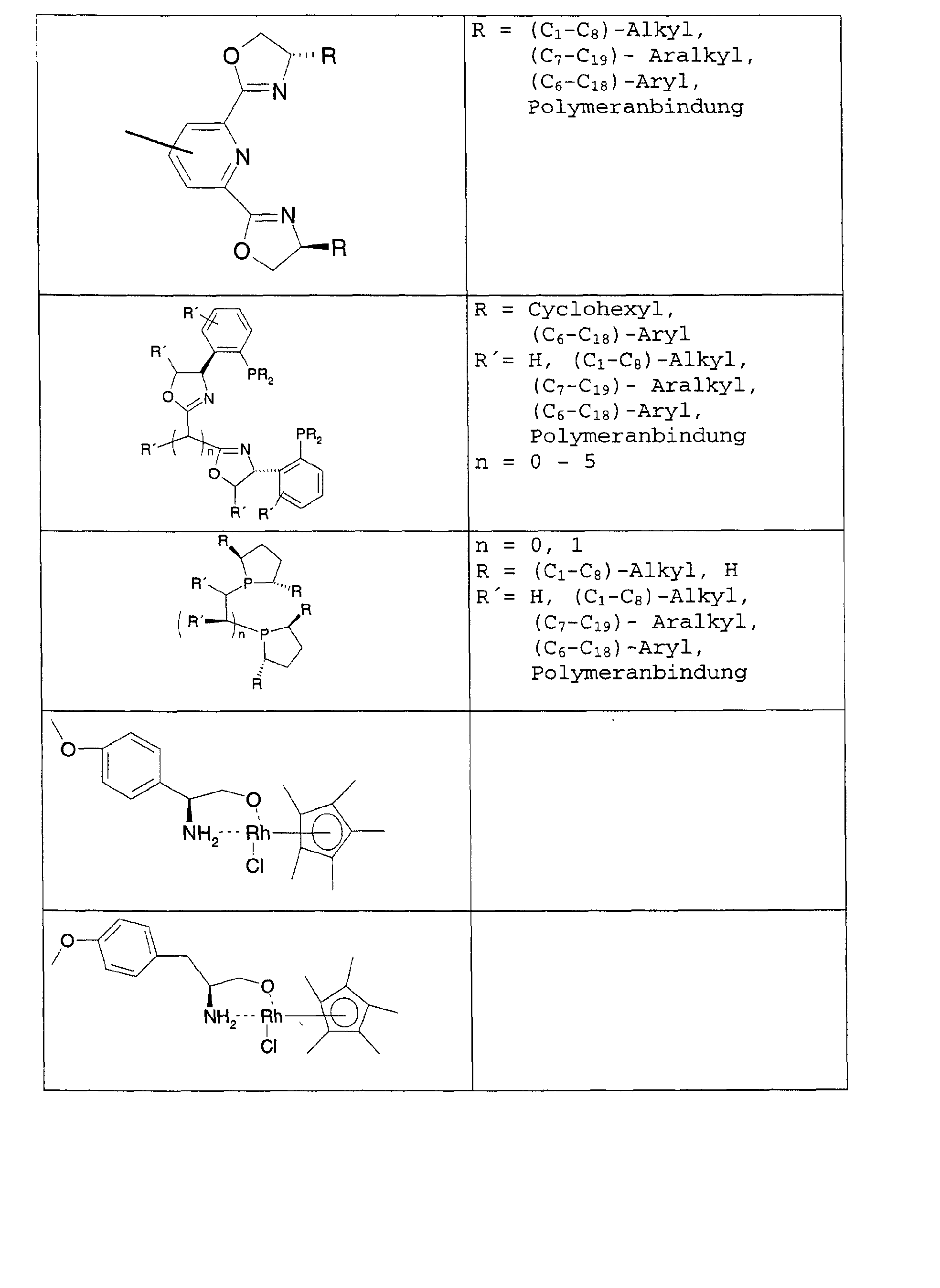

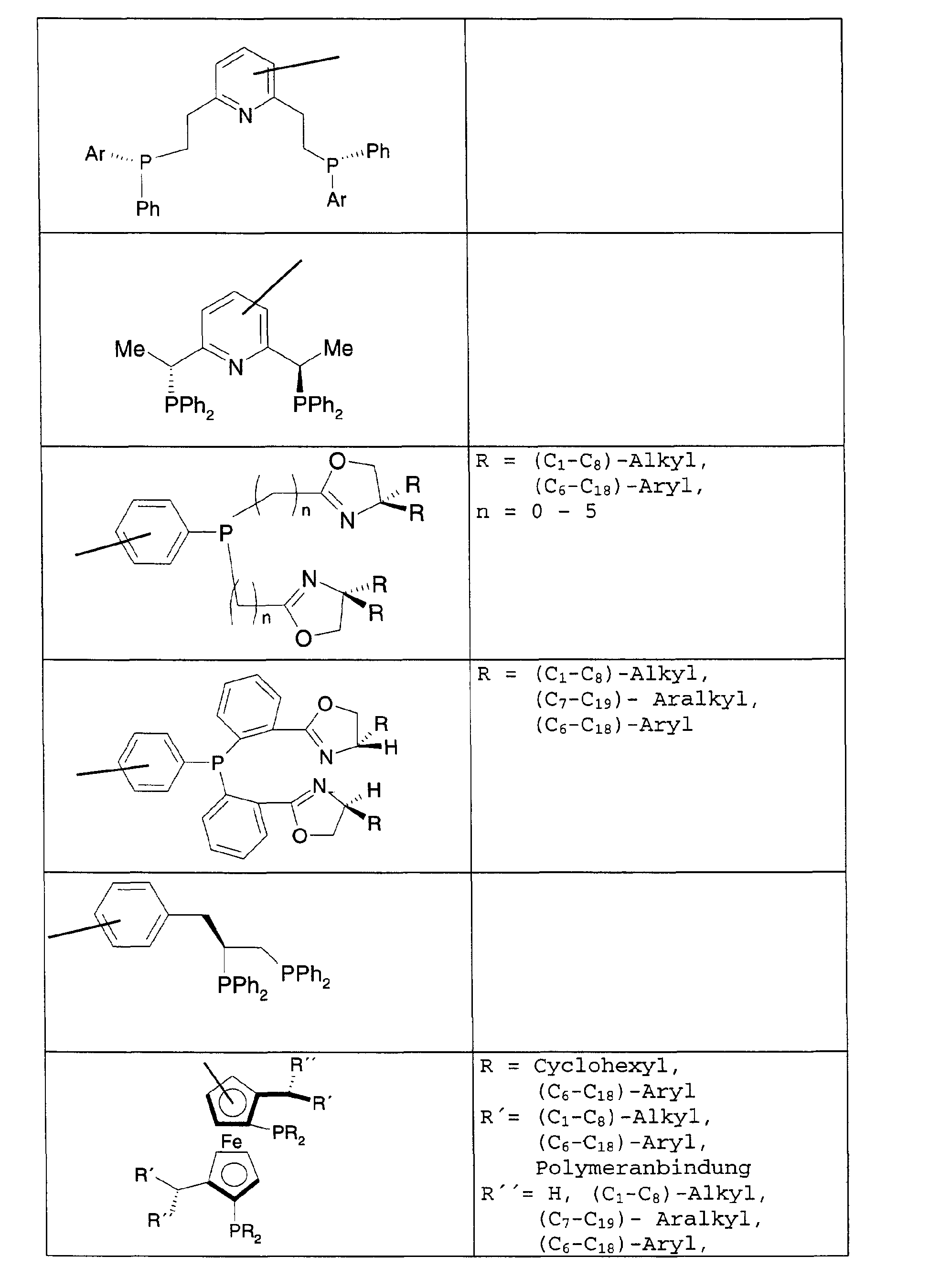

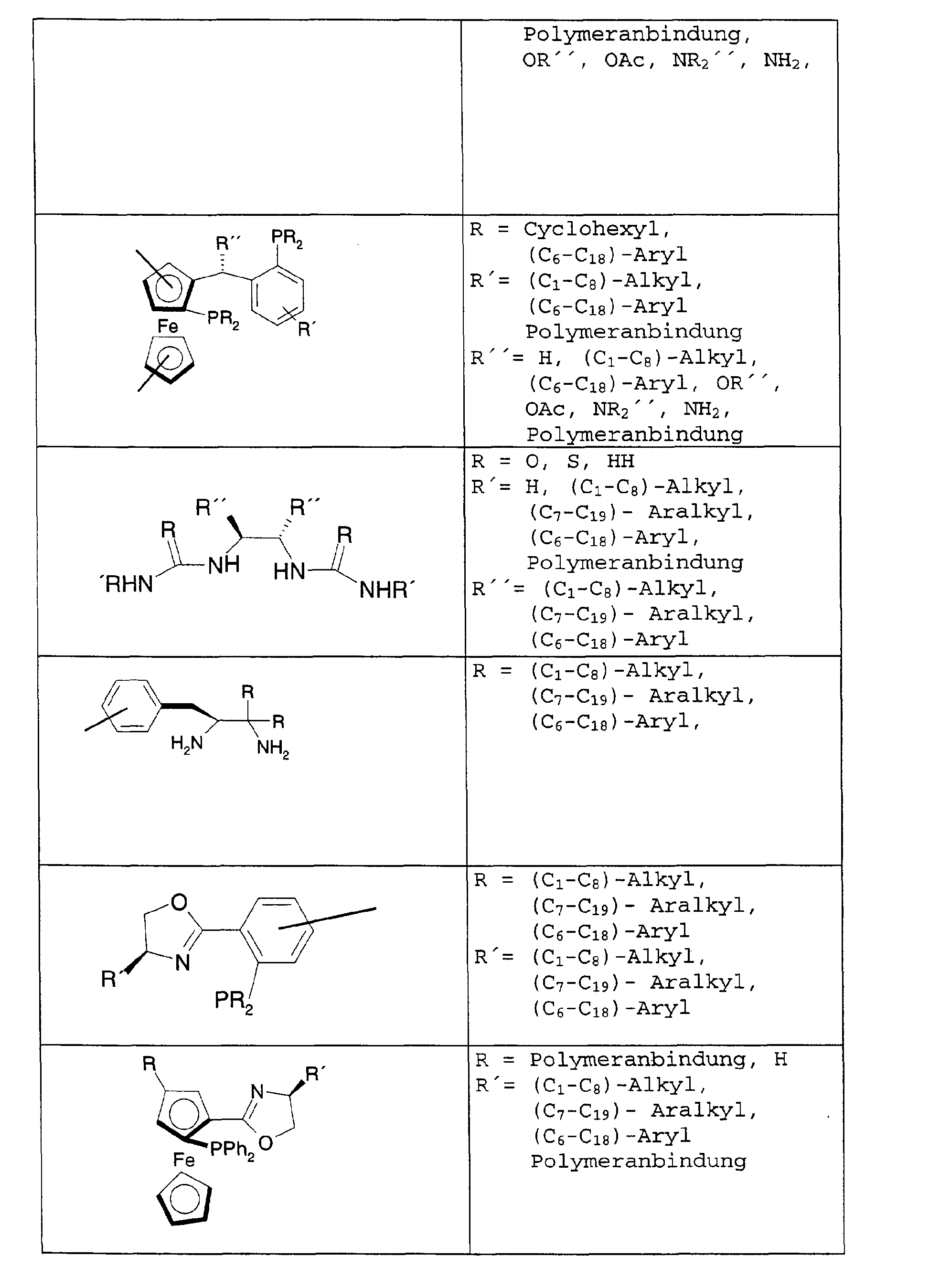

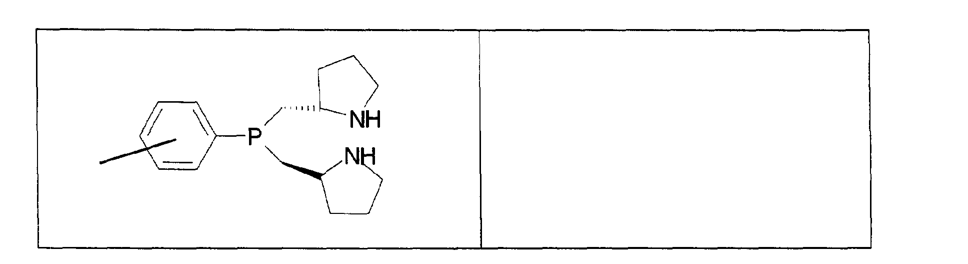

aufweisen,
wobei diese aktiven Zentren über einen Linker ausgewählt aus der Gruppe

| | | |
|---|---|---|
| a) | - Si (R₂) - | |
| b) | - (SiR₂-O)ₙ- | n=1-10000 |
| c) | - (CHR-CHR-O)ₙ- | n=1-10000 |
| d) | - (X)ₙ- | n=1-20 |
| e) | Z- (x)ₙ- | n=0-20 |
| f) | - (X)ₙ-W | n=0-20 |
| g) | Z- (X)ₙ-W | n=0-20 |

wobei
R bedeutet H, (C₁-C₈)-Alkyl, (C₆-C₁₈)-Aryl, (C₇-C₁₉)-Aralkyl, ((C₁-C₈)-Alkyl)₁₋₃-(C₆-C₁₈)-Aryl,
X bedeutet (C₆-C₁₈)-Arylen, (C₁-C₈)-Alkylen, (C₁-C₈)-Alkenylen, ((C₁-C₈)-Alkyl)₁₋₃-(C₆-C₁₈)-Arylen, (C₇-C₁₉)-Aralkylen,
Z bedeutet polymerseitig C(=O)O-, C(=O)NH-, C(=O)-, NR, O, CHR, CH2, C=S, S, PR,
W bedeutet ligandenseitig C(=O)O-, C(=O)NH-, C(=O)-, NR, O, CHR, CH₂, C=S, S, PR,
oder direkt an das molekulargewichtsvergrößernde Polymer gebunden sind und das Molekulargewicht des polymeren Liganden > 1000 g/mol beträgt, erhält man die Möglichkeit weitere sehr gut recyclierbare polymervergrößerte Hydrierkatalysatoren für die industrielle organische Synthese einzusetzen.
Die angedeuteten Bindungen in den in der Tabelle angegebenen chemischen Strukturen stellen vorteilhafte Anbindungsstellen sowohl für das Polymer als auch für den ggf. zum Einsatz kommenden Linker dar. Wahlweise ist eine der angedeuteten Möglichkeiten für die Anbindung ausreichend. Alternativ ist in der rechten Spalte der Tabelle vereinzelt für bestimmte Reste die Möglichkeit der Polymeranbindung angedeutet. Synonym ist darunter auch die Möglichkeit zur Anbindung der Linker zu verstehen.

Als besonders bevorzugt einzusetzende aktive Zentren gelten die ersten fünf allgemeinen Strukturen der obigen Tabelle.

Die molekulargewichtsvergrößerten homogen löslichen Hydrierkatalysatoren können also wie folgt aus Molekulargewichtsvergrößerung, ggf. Linker und aktivem Zentrum aufgebaut sein.

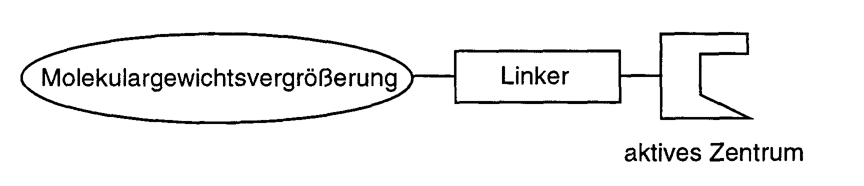

### Molekulargewichtsvergrößerung:

Die Molekulargewichtsvergrößerung kann im Rahmen der Erfindung frei gewählt werden. Sie wird einerseits durch Praktikabilitäts- und Kostenerwägungen, andererseits durch technische Rahmenbedingungen (Rückhaltevermögen, Löslichkeit etc.) begrenzt. Aus dem Stand der Technik sind einige Polymervergrößerungen für Katalysatoren bekannt (Reetz et al., Angew. Chem. 1997, 109, 1559f.; Seebach et al., Helv. Chim Acta 1996, 79, 1710f.; Kragl et al., Angew. Chem. 1996, 108, 684f.; Schurig et al., Chem. Ber./Recueil 1997, 130, 879f.; Bolm et al., Angew. Chem. 1997, 109, 773f.; Bolm et al. Eur. J. Org. Chem. 1998, 21f.; Baystone et al. in Speciality Chemicals 224f.; Salvadori et al., Tetrahedron: Asymmetry 1998, 9, 1479; Wandrey et al., Tetrahedron: Asymmetry 1997, 8, 1529f.; ibid. 1997, 8, 1975f.; Togni et al. J. Am. Chem. Soc. 1998, 120, 10274f., Salvadori et al., Tetrahedron Lett. 1996, 37, 3375f; WO 98/22415; insbesondere DE 19910691.6; Janda et al., J. Am. Chem. Soc. 1998, 120, 9481f.; Andersson et al., Chem. Commun. 1996, 1135f.; Janda et al., Soluble Polymers 1999, 1, 1; Janda et al., Chem. Rev. 1997, 97, 489; Geckler et al., Adv. Polym. Sci. 1995, 121, 31; White et al., in "The Chemistry of Organic Silicon Conpounds" Wiley, Chichester, 1989, 1289; Schuberth et al., Macromol. Rapid Commun. 1998, 19, 309; Sharma et al., Synthesis 1997, 1217; "Functional Polymers" Ed.: R. Arshady, ASC, Washington, 1996; "Praktikum der Makromolekularen Stoffe", D. Braun et al., VCH-Wiley, Weinheim 1999).

Bevorzugte molekulargewichtsvergrößernde Polymere zur Anbindung der Liganden sind Polyacrylate, Polyvinylpyrrolidinone, Polysiloxane, Polybutadiene, Polyisoprene, Polyalkane, Polystyrole, Polyoxazoline oder Polyether (PEG, PEP) oder Mischungen derselben. Unter Mischungen wird im Rahmen der Erfindung die Tatsache verstanden, daß einzelne Polymere verschiedener Provenienz zu Blockpolymeren zusammenpolymerisiert werden. Auch statistische Mischungen der Monomere im Polymer sind möglich.

Ganz besonders bevorzugt sind Polyacrylate, Polysiloxane, Polystyrole und/oder Polyether für diesen Zweck geeignet.

Die molekulargewichtsvergrößernden Polymere können ein mittleres Molekulargewicht im Bereich von 1.000-1.000.000, vorzugsweise 5.000 - 500.000, besonders bevorzugt 5.000 - 300.000, g/mol aufweisen.

### Linker:

Zwischen eigentlichem Katalysator bzw. Ligand (aktivem Zentrum) und der Polymervergrößerung kann ein Linker eingebaut sein. Der Katalysator kann aber auch direkt an die Polymervergrößerung gebunden sein.
Der Linker dient dazu, einen Abstand zwischen aktivem Zentrum und Polymer aufzubauen, um gegenseitige für die Reaktion nachteilige Wechselwirkungen abzumildern bzw. auszuschalten.
Im Rahmen der Erfindung sind diese eigentlich aktiven Hydrierkatalysatoren also direkt oder bevorzugt über einen Linker ausgewählt aus der oben angegebenen Gruppe an die Polymervergrößerung gebunden.
Weitere bevorzugte Linker sind in folgendem Schema dargestellt:

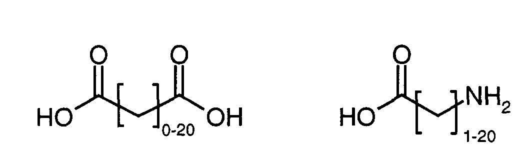

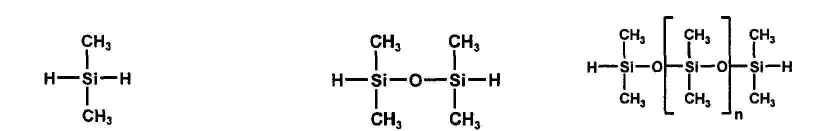

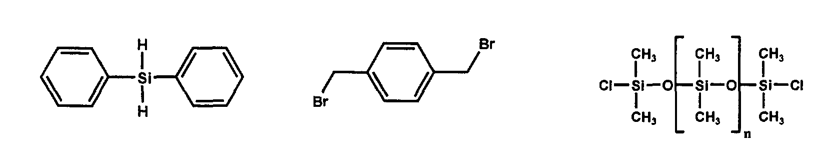

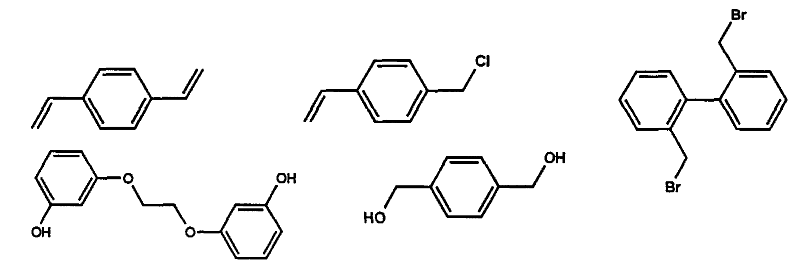

Ganz besonders bevorzugt sind jedoch Linker wie z. B. 1,4'-Biphenyl, 1,2-Ethylen, 1,3-Propylen, PEG-(2-10), *α*,*ω*-Siloxanylen oder 1,4-Phenylen sowie α,ω-1,4-Bisethylenbenzol oder Linker, welche ausgehend von Siloxanen der allgemeinen Formel I 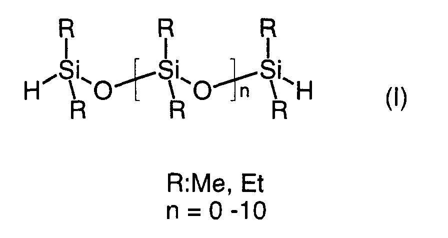 erhältlich sind. Diese lassen sich unter Hydrosilylierungsbedingungen (Übersicht über die Hydrosilylierungsreaktion von Ojima in The Chemistry of Organic Silicon Compounds, 1989 John Wiley & Sons Ltd., 1480 - 1526) leicht an evt. vorhandene Doppelbindungen in den Polymeren und geeignete funktionelle Gruppen der aktiven Zentren binden.

### Aktive Zentren:

Unter einem aktiven Zentrum versteht man im Rahmen der Erfindung den eigentlichen niedermolekularen Ligand, der bisher normalerweise für die Hydrierung benutzt wird. Dieser kann - wie oben dargelegt - direkt oder über einen wie oben angegebenen Linker an die Molekulargewichtsvergrößerung angebracht werden.

Für die Auswahl der aktiven Zentren aus der Gruppe gilt, daß besonders gut einzusetzende aktive Zentren solche sind, welche zum einen eine hohe optische Ausbeute bei einer möglichst schnellen Hydrierung gewährleisten und so eine hohen Durchsatz erzeugen helfen. Darüber hinaus sollte das aktive Zentrum gegen Luftsauerstoff hinreichend oxidationsunempfindlich sein, so daß der Einsatz von entgastem Lösungsmittel nicht von Nöten ist und eine ausreichende Lagerstabilität der Liganden gegeben ist.

Äußerst bevorzugt ist als aktives Zentrum das 1,2-Diphosphin der folgenden Struktur 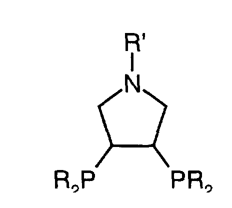 worin
R' für H, (C₁-C₈)-Alkyl, (C₆-C₁₈)-Aryl, (C₇-C₁₉)-Aralkyl,
R für Cyclohexyl, (C₆-C₁₈)-Aryl
steht.

Es liegt im Rahmen der Erfindung, daß nach Maßgabe des Wissens eines Fachmanns die oben genannten Bestandteile des molekulargewichtsvergrößerten Katalysators (Molekularvergrößerung, Linker, aktives Zentrum) im Hinblick auf eine optimale Reaktionsführung beliebig kombiniert werden können.

Kombination von Molekulargewichtsvergrößerung zu Linker/aktivem Zentrum:

Im Prinzip gibt es zwei Vorgehensweisen, wie die Linker/aktiven Zentren an die Molekulargewichtsvergrößerung angehängt werden können:
a) das katalytisch aktive Zentrum kann mit angebundenem Linker oder direkt an ein Monomer gebunden werden und dieses wird anschließend in Gegenwart nicht modifizierter Monomere polymerisiert, oder
b) das katalytisch aktive Zentrum wird über einen Linker oder direkt an die Molekulargewichtsvergrößerung gebunden.
Ggf. können Polymere nach a) oder b) erstellt werden, welche weiterhin mit anderen Polymeren, welche katalytisch aktive Zentren aufweisen und nach a) oder b) hergestellt sein können, copolymerisiert werden können.

Weiterhin gilt prinzipiell für die Anzahl der Linker/aktiven Zentren pro Monomer im Polymer, daß möglichst viele derartige katalytisch aktive Zentren auf einem Polymer Platz finden sollten, so daß der Umsatz pro Polymer maximal ist. Auf der anderen Seite sollten die Zentren jedoch einen solchen Abstand voneinander einnehmen, daß eine gegenseitige negative Beeinflussung der Reaktivität (TOF, Selektivität) minimiert wird bzw. gar nicht erst stattfindet. Vorzugsweise sollte daher der Abstand der Linker/aktiven Zentren im Polymer voneinander im Bereich von 1-200 Monomereinheiten, vorzugsweise 5-25 Monomereinheiten, liegen.

Vorzugsweise werden dabei solche Stellen im Polymer oder zu polymerisierendem Monomer zur Anbindung des Linkers/aktivem Zentrum herangezogen, welche sich leicht funktionalisieren lassen bzw. es erlauben, schon eine vorhandene Funktionalität zur Anbindung zu benutzen. So eignen sich bevorzugt Heteroatome oder ungesättigte Kohlenstoffatome zum Aufbau der Anbindung.

Z.B. können im Falle von Styrol/Polystyrol die vorhanden Aromaten als Verbindungspunkte zu den Linkern/aktiven Zentren herangezogen werden. An diese Aromaten können, vorzugsweise in 3-, 4-, 5-Stellung, besonders bevorzugt ist die 4-Stellung, über die normale Aromatenchemie Funktionalitäten gut angeknüpft werden. Vorteilhaft ist aber auch, der zu polymerisierenden Mischung z.B. bereits funktionalisiertes Monomer zuzumischen und nach der Polymerisation an die im Polystyrol vorhandenen Funktionalitäten den Linker zu binden. Vorteilhaft für diesen Zweck sind z.B. para-Hydroxy-, para-Chlormethyl- oder para-Aminostyrolderivate geeignet.

Für Polyether bietet sich die ohnehin vorhandene terminale OH-Gruppe zur Anbindung an die Linker/aktiven Zentren durch Ester- oder Etherbildung oder durch Oxidation dieser Gruppe zu einer Säuregruppe mit anschließender Veresterung oder Amidbildung an (Nagel et al., Chem. Ber. 1986, 119, 3326-3343; Oehme et al. DE 19730657.8).

Im Falle der Polyacrylate ist im Monomerbestandteil jeweils eine Säuregruppe oder Estergruppe vorhanden, an der vor oder nach der Polymerisation der Linker oder das aktive Zentrum vorzugsweise über eine Ester- oder Amidbindung angebunden werden kann.

Polysiloxane als Molekulargewichtsvergrößerung werden vorzugsweise gleich so aufgebaut, daß neben Dimethylsilaneinheiten auch Hydromethylsilaneinheiten vorliegen, welche durch Alkylreste, die Doppelbindungen oder Heteroatomen aufweisen, modifiziert sind. An diese Stellen können dann weiterhin die Linker/aktiven Zentren angekoppelt werden. Vorzugsweise lassen sich diese unter Hydrosilylierungsbedingungen (Übersicht über die Hydrosilylierungsreaktion von Ojima in The Chemistry of Organic Silicon Compounds, 1989 John Wiley & Sons Ltd., 1480 - 1526) an die ins Auge gefaßten Funktionalitäten im Polymer anbinden.
Geeignete derart modifizierte Polysiloxane sind in der Literatur bekannt ("Siloxane polymers and copolymers" White et al., in Ed. S. Patai "The Chemistry of Organic Silicon Compounds" Wiley, Chichester, 1989, 46, 2954; C. Wandrey et al. TH:Asymmetry 1997, 8, 1975).

### Kombination von Linker zu aktivem Zentrum:

Was für die Verbindung von Polymer zu Linker/aktivem Zentrum gilt, ist synonym für die Anbindung des aktiven Zentrums an den Linker anzuwenden.

So kann die Linker/Polymeranbindung an die aktiven Zentren bevorzugt über dessen Heteroatome oder bestimmte Funktionalitäten wie C=O, CH₂, O, N, S, P, Si, B erfolgen, wobei bevorzugt Ether-/Thioetherbindungen, Aminbindungen, Amidbindungen geknüpft oder Veresterungen, Alkylierungen, Silylierungen sowie Additionen an Doppelbindungen durchgeführt werden.

Sofern also Heteroatome in den aktiven Zentren vorhanden sind, welche nicht zur Komplexierung des Metalls herangezogen werden, erfolgt die Anbindung der aktiven Zentren bevorzugt über diese, wie zum Beispiel bei den allgemeinen Strukturen 1-3 der Tabelle über die Aminofunktion.
Bei der allg. Struktur 4 der Tabelle ist die Anknüpfung in den Positionen 5-7 oder 5'-7' besonders geeignet, äußerst bevorzugt ist die 6 bzw. 6'-Position.
Bei der allg. Struktur 5 der Tabelle ist die 4-6 bzw. 4'-6'-Position gut geeignet. Besonders gut ist die 5 oder 6 oder 5' oder 6'-Position auszuwählen.

Äußerst bevorzugt sind folgende Strukturen, in denen die Zahlen für a und b statistische Mittelwerte darstellen. Sie liegen vorteilhafterweise für a bei 1 und für b bei 2 bis 50, bevorzugt 5 bis 25 (Schema 1).

### Schema 1:

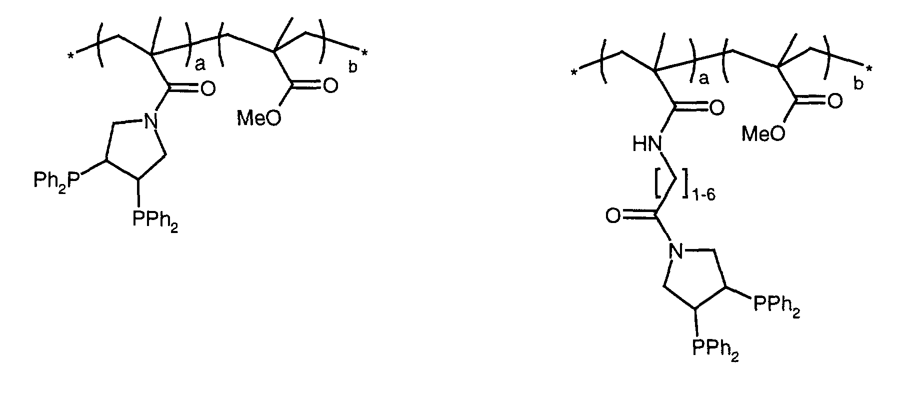

Gegenstand der vorliegenden Anmeldung ist ebenfalls ein Verfahren zur Herstellung von erfindungsgemäßen Liganden, welches sich dadurch auszeichnet, daß man
a) das katalytisch aktive Zentrum mit angebundenem Linker oder direkt an ein Monomer bindet und dieses in Gegenwart nicht modifizierter Monomere polymerisiert,
b) das katalytisch aktive Zentrum über einen Linker oder direkt an das fertige Polymer bindet, oder
c) Polymere nach a) oder b) erstellt und diese mit anderen Polymeren copolymerisiert, welche katalytisch aktive Zentren aufweisen können.

Die erfindungsgemäßen Liganden werden bevorzugt zur Herstellung von enantiomer angereicherten organischen Verbindungen eingesetzt. Ganz besonders bevorzugt ist deren Anwendung in einem Membranreaktor. Dadurch können die normalerweise im Batchverfahren durchgeführten Synthesen quasikontinuierlich oder kontinuierlich erfolgen, was aus Kostensicht für ein technisches Verfahren besonders vorteilhaft erscheint. Die Anwendung der erfindungsgemäßen Liganden bzw. daraus hergestellten Katalysatoren im Membranreaktor läuft analog den im Stand der Technik beschriebenen Verfahren (DE 199 10 691.6; Wandrey et al., Tetrahedron Asymmetry 1999, 10, 923-928).

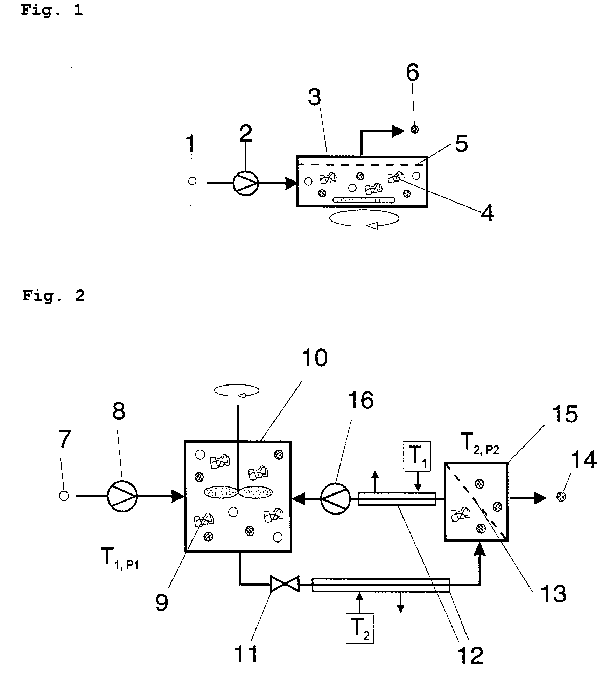

Die kontinuierliche Fahrweise kann dabei wie gewünscht im Cross-Flow-Filtrationsmodus (Fig. 2) oder als Dead-End-Filtration (Fig. 1) durchgeführt werden.
Im Dead-End-Betrieb wird Katalysator und Lösungsmittel im Reaktor vorgelegt und anschließend das gelöste Substrat zudosiert, wobei gleichzeitig eine Wasserstoffquelle anwesend sein muß. Das Substrat wird über den Katalysator enantioselektiv reduziert und anschließend über die Ultrafiltrationsmembran mit dem Lösungsmittelstrom aus dem Membranreaktor ausgetragen.
In der Cross-Flow-Fahrweise wird die Reaktionslösung, beinhaltend Lösungsmittel Substrat, Produkt und Katalysator sowie Wasserstoffquelle, an einer Membran, über der ein Druckpotential liegt, vorbeigeführt.
Für beide Fälle erfolgt das Zudosieren des gelösten Substrats in einer solchen Geschwindigkeit, und das Druckpotential über die jeweilige Membran wird so eingestellt, daß die ausgeschleuste Lösung überwiegend enantioselektiv hydriertes Produkt enthält. Beide Verfahrensvarianten sind im Stand der Technik beschrieben (Engineering processes for Bioseparations Ed.: L. R. Weatherley, Butterworth-Heinemann, 1994, S. 135-165).

Die Wasserstoffquelle zur erfindungsgemäßen Hydrierung kann gasförmiger Wasserstoff sein, der während der Reaktion in das System eingeschleust wird. In diesem Fall befindet sich die gesamte Apparatur vorzugsweise in einer Wasserstoffatmosphäre bei Hydrierdruck, damit beidseitig der Filtrationsmembran der gleiche Wasserstoffdruck herrscht und Wasserstoff so nicht über die Membran aus dem System diffundieren kann.
Zusätzlich können so leichter die Druckverhältnisse über die Membran der Reaktion wie oben angesprochen angepaßt werden. Ein hoher Druckunterschied vor und nach der Membran würde zu Ausgasungen auf der Filtratseite führen, die apparative Schwierigkeiten zur Folge haben könnte. Außerdem könnte ein erhöhter Wasserstoffdurchtritt durch die Membran ein Fouling beschleunigen.
Vorzugsweise arbeitet man bei dieser Methode bei Drücken von 0,1 - 20, vorzugsweise 0,2 - 0,5 MPa Wasserstoff.

In einer weiteren bevorzugten Ausgestaltung setzt man bei der Hydrierung die Methode der Transferhydrierung ein. Sie ist beispielhaft in der Literatur beschrieben ("Asymmetric transfer hydrogenation of C=O and C=N bonds", M. Wills et al. Tetrahedron: Asymmetry 1999, 10, 2045; "Asymmetric transfer hydrogenation catylsed by chiral ruthenium complexes" R. Noyori et al. Acc. Chem. Res. 1997, 30, 97; "Asymmetric catalysis in organic synthesis", R. Noyori, John Wiley & Sons, New York, 1994, S.123; "Transition metals for organic Synthesis" Ed. M. Beller, C. Bolm, Wiley-VCH, Weinheim, 1998, Bd.2, S.97; "Comprehensive Asymmetric Catalysis" Ed.: Jacobsen, E.N.; Pfaltz, A.; Yamamoto, H., Springer-Verlag, 1999).
Als bevorzugte wasserstofferzeugende Substrate werden dabei Alkohole, Formiate, Cyclohexen oder Cyclohexadien, ganz besonders bevorzugt Ameisensäure in Gegenwart einer Base, wie z.B. Triethylamin, eingesetzt.

Mit Hilfe der erfindungsgemäßen Liganden lassen sich bevorzugt C=C-, C=N- oder C=O-Doppelbindungen hydrieren.

Gegenstand der Erfindung ist ebenfalls ein molekulargewichtsvergrößerter Katalysator, der aus einem erfindungsgemäßen Liganden und Metallen oder Metallionen ausgewählt aus der Gruppe
Ru, Rh, Ir, Pd, Ni, Pt, Co
aufgebaut ist.

Unter einem molekulargewichtsvergrößerten Ligand/Katalysator ist im Rahmen der Erfindung ein solcher zu verstehen, bei dem das molekulargewichtsvergrößernde Polymer kovalent an das aktive Zentrum gebunden ist.

Als (C₁-C₈)-Alkyl sind anzusehen Methyl, Ethyl, *n*-Propyl, Isopropyl, *n*-Butyl, Isobutyl, sec-Butyl, *tert*-Butyl, Pentyl, Hexyl, Heptyl oder Octyl samt aller Bindungsisomeren.

Unter einem (C₆-C₁₈)-Arylrest wird ein aromatischer Rest mit 6 bis 18 C-Atomen verstanden. Insbesondere zählen hierzu Verbindungen wie Phenyl-, Naphthyl-, Anthryl-, Phenanthryl-, Biphenylreste. Diese können einfach oder mehrfach mit (C₁-C₈)-Alkoxy, (C₁-C₈)-Haloalkyl, OH, C1, NH₂, NO₂ substituiert sein. Außerdem kann der Rest ein oder mehrere Heteroatome wie N, O, S aufweisen.

(C₁-C₈)-Alkoxy ist ein über ein Sauerstoffatom an das betrachtete Molekül gebundener (C₁-C₈)-Alkyl-Rest.

(C₁-C₈)-Haloalkyl ist ein mit einem oder mehreren Halogenatomen substituierter (C₁-C₈)-Alkyl-Rest. Als Halogenatome kommen insbesondere Chlor und Fluor in Betracht.

Ein (C₇-C₁₉)-Aralkylrest ist ein über einen (C₁-C₈)-Alkylrest an das Molekül gebundener (C₆-C₁₈)-Arylrest.

Unter dem Begriff Acrylat wird im Rahmen der Erfindung auch der Begriff Methacrylat verstanden.

Im Rahmen der Erfindung wird unter Membranreaktor jedwedes Reaktionsgefäß verstanden, bei dem der Katalysator in einem Reaktor eingeschlossen wird, während niedermolekularere Stoffe dem Reaktor zugeführt werden oder ihn verlassen können. Dabei kann die Membran direkt in den Reaktionsraum integriert werden oder außerhalb in einem separaten Filtrationsmodul eingebaut sein, bei der die Reaktionslösung kontinuierlich oder intermittierend durch das Filtrationsmodul strömt und das Retentat in den Reaktor zurückgeführt wird. Geeignete Ausführungsformen sind u.a. in der WO98/22415 und in Wandrey et al. in Jahrbuch 1998, Verfahrenstechnik und Chemieingenieurwesen, VDI S. 151ff.; Wandrey et al. in Applied Homogeneous Catalysis with Organometallic Compounds, Vol. 2, VCH 1996, S.832 ff.; Kragl et al., Angew. Chem. 1996, 6, 684f. beschrieben.

Die dargestellten chemischen Strukuren beziehen sich auf alle möglichen Stereoisomeren, die durch Abänderung der Konfiguration der einzelnen chiralen Zentren, Achsen oder Ebenen erreicht werden können, also alle möglichen Diastereomere, sowie alle darunter fallenden optische Isomere (Enantiomere).

### Erläuterung der Figuren:

### Beschreibungen der Zeichnungen:

Fig. 1 zeigt einen Membranreaktor mit Dead-End-Filtration. Das Substrat 1 wird über eine Pumpe 2 in den Reaktorraum 3 überführt, der eine Membran 5 aufweist. Im rührerbetriebenen Reaktorraum befinden sich neben dem Lösungsmittel der Katalysator 4, das Produkt 6 und nicht umgesetztes Substrat 1. Über die Membran 5 wird hauptsächlich niedermolekulares 6 abfiltriert.

Fig. 2 zeigt einen Membranreaktor mit Cross-Flow-Filtration. Das Substrat 7 wird hier über die Pumpe 8 in den gerührten Reaktorraum überführt, in dem sich auch Lösungsmittel, Katalysator 9 und Produkt 14 befindet. Über die Pumpe 16 wird ein Lösungsmittelfluß eingestellt, der über einen ggf. vorhandenen Wärmetauscher 12 in die Cros-Flow-Filtrationszelle 15 führt. Hier wird das niedermolekulare Produkt 14 über die Membran 13 abgetrennt. Hochmolekularer Katalysator 9 wird anschließend mit dem Lösungsmittelfluß ggf. wieder über einen Wärmetauscher 12 ggf. mit Hilfe des Ventils 11 zurück in den Reaktor 10 geleitet.

### Beispiele:

### Beispiele PMMA-Pyrphos:

### Acylierung zu MMA-PYRPHOS (3,4-Bis-(diphenylphosphino)-N-isobutenon-pyrrolidin):

Zu einer Lösung von 5,00 g 3,4-Bis-(diphenylphosphino)-pyrrolidin in 20mL Toluol und 20mL 2N NaOH werden bei 0°C 1,54 g Methacrylsäurechlorid in 35mL Toluol langsam zugetropft. Nach beendeter Reaktion werden die Phasen getrennt und die wäßrige Phase mit Toluol extrahiert. Die vereinigten organischen Phasen werden nacheinander mit verd. Salzsäure und ges. NaCl-Lösung gewaschen. Nach dem Trocknen über Magnesiumsulfat wird das Lösungsmittel im Vakuum abgezogen. Man erhält 5.7 g des gewünschten Produktes als weißes Pulver. Die NMR-Analytik bestätigt das Zielprodukt.

### Polymerisation zu PMMA-PYRPHOS:

Zu einer Lösung von 1.0mmol MMA-Pyrphos in Methylisobutylketon werden 20.0mmol Methylmethacrylat (MMA) sowie 0.lmmol Azoisobutyronitril (AIBN) gegeben. Nach Erwärmen über 20 h bei 80°C wird das Produkt in Petrolether gefällt und abfiltriert. Man erhält 1.5g des gewünschten Polymers als weißes Pulver. Die NMR-Analytik bestätigt das Zielprodukt

### Asymmetrische Hydrierung:

Eine Lösung von 182mg PMMA-Pyrphos und 2,00g Acetamidozimtsäure in 60mL MeOH/H₂O (5:1) werden bei 50°C und 50bar H₂, so lange gerührt, bis kein Wasserstoff mehr aufgenommen wird.

Anschließend wird das Druckgefäß entspannt und die Reaktionslösung mit Ether extrahiert. Nach dem Trocknen der organischen Phase über Magnesiumsulfat wird das Lösungsmittel im Vakuum abgezogen. Man erhält 1.8g N-Ac-Phenlyalanin mit einer Selektivität von ee=40%. Die HPLC-Analytik bestätigt die gewünscht Zielverbindung.

### Beispiele Polyether-Pyrphos:

### 1. Chlorkohlensäureester

Alle Operationen wurden unter Argon durchgeführt, um Luft und Feuchtigkeit auszuschliessen.

Eine Lösung von 1,32g (1.1 mmol) Brij 35
(C₁₂H₂₅(OCH₂CH₂)₃₂OH) bzw. 5,24g (1;1 mmol) Synperonic PE/P 103 (HO(CH₂CH₂O)₁₇(CH(CH₃)CH₂O)₅₆(CH₂CH₂O)₁₇H) in 10ml Dichlormethan werden langsam zu 90ml einer auf -40°C gekühlten Lösung von Phosgen (1,7662 mmol/ml) getropft und innerhalb 5h auf 0°C gebracht. Das überschüssige Phosgen wird unter entsprechenden Vosichtsmassnahmen durch Einengen der Lösung auf etwa 3ml entfernt und der verbleibende Rückstand direkt weiter verwendet.

### 2. Umsetzung der Chlorkohlensäureester mit Pyrphos ((R,R)-3,4-Bis(diphenylphosphino)-pyrrolidin)

Zu einer Lösung aus 0,483g (1.1 mmol) Pyrphos und 0,18ml (1.32 mmol) Triethylamin in 10 ml Dichlormethan werden in einer Argonatmosphäre und unter Rühren bei 0°C 1,1 mmol des entsprechenden Chlorkohlensäureesters in 3 ml CH₂Cl₂ getropft. Die Reaktionsmischung wird bei 0 bis 5 °C drei Stunden gerührt und anschließend eingeengt. Der Rückstand wird in 10 ml Ether aufgenommen und zum Auskristallisieren des Triethylaminhydrochlorid über Nacht stehengelassen. Am nächsten Tag wird das Gemisch inert filtriert, das Filtrat eingeengt und der Rückstand im Vakuum bei 50 °C getrocknet.

### Analyse von Brij 35 abgeleitetem Derivat (I):

C₈₇H₁₄₃NO₂₅P₂ (1664,82)
Ber.: C = 62,76 %; H = 8.65 %; N = 0,84 %; P = 3,72 %
Gef.: C = 63,57 %; H = 8,48 %; N = 1,26 %; P = 4,11 %
³¹P = -11,8 ppm (CDCl₃) Ausbeute = 1,34 g ( 80,5% )

### Analyse von Blockpolymeren Synperonic PE/P 103 abgeleitetem Derivat (II):

C₂₉₄H₅₂₄N₂O₉₄P₄ (5714,51)
Ber.: C = 61,96 %; H = 9,27 %; N = 0,49 %; P = 2,17 %
Gef.: C = 62,13 %; H = 9,15 %; N = 0,91 %; P = 2,48 %
³¹P = -11,8 ppm (CDCl₃) Ausbeute = 5,27 g (92,2%)

Hydrierung von (Z)-α-Acetamidozimtsäuremethylester in Wasser und Methanol mit dem Katalysatorsystem: [Rh(COD)₂]BF₄ + amphiphilisierte Liganden (I) und (II); H₂ 1 bar; 25° C

| Medium | Rh:I:Substrat | t _{½} (min) | % eeS | Umsatz % |
|---|---|---|---|---|
| H₂O | 1:1:100 | ~ 10 h | 88 | 98 (Rh^{o}↓) |
| | | | | |
| | Rh:II:Substrat | | | |
| H₂O | 2:1:100 | ~ 12 h | 80 | 94 (Rh^{o}↓) |
| H₂O | 1:0,5:100 | - 11 h | 83 | 96 (Rh^{o}↓) |
| Methanol | 1:0,5:100 | 248 min | 88 | 100 |
| H₂O+SDS(Rh:SDS=1:2) | 1:0,5:100 | ~ 9 h | 79 | 97 |

| | | | | |
|---|---|---|---|---|
| SDS: Sodiumdodecylsulfat | | | | |

In einem erneuten Ansatz wurde 1 mmol Substrat, 0,0005 mmol Ligand (II), 0,001 mmol Rh(COD)₂BF₄, in 15 ml Methanol gelöst. Man hydrierte im ersten Fall bei 10 bar, RT und 24 h, im zweiten bei 20 bar, RT und 24 h.

Ergebnis: Fall 1) 88,6% ee; Fall 2) 89,5% ee

## Patentansprüche

1. Molekulargewichtsvergrößerte homogen lösliche Liganden für Hydrierkatalysatoren aufweisend homochirale aktive Zentren ausgewählt aus der Gruppe 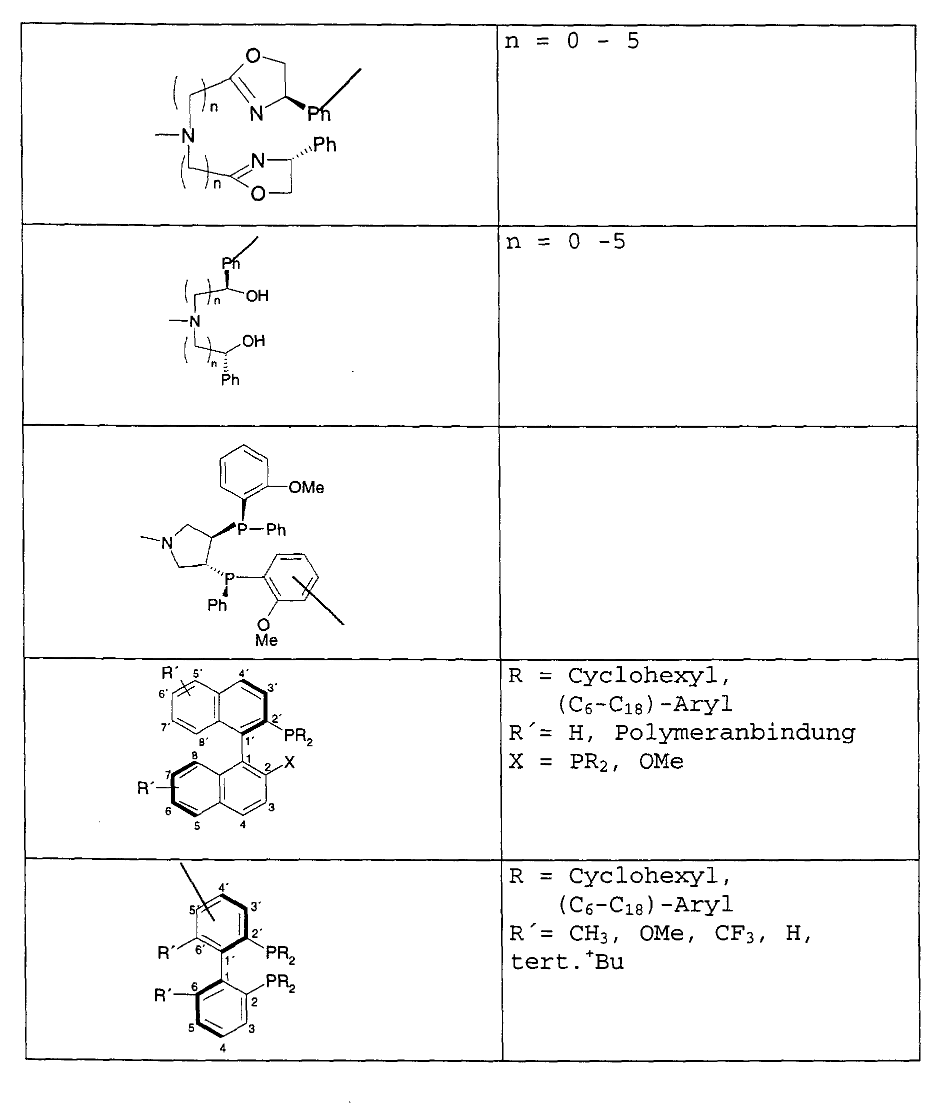 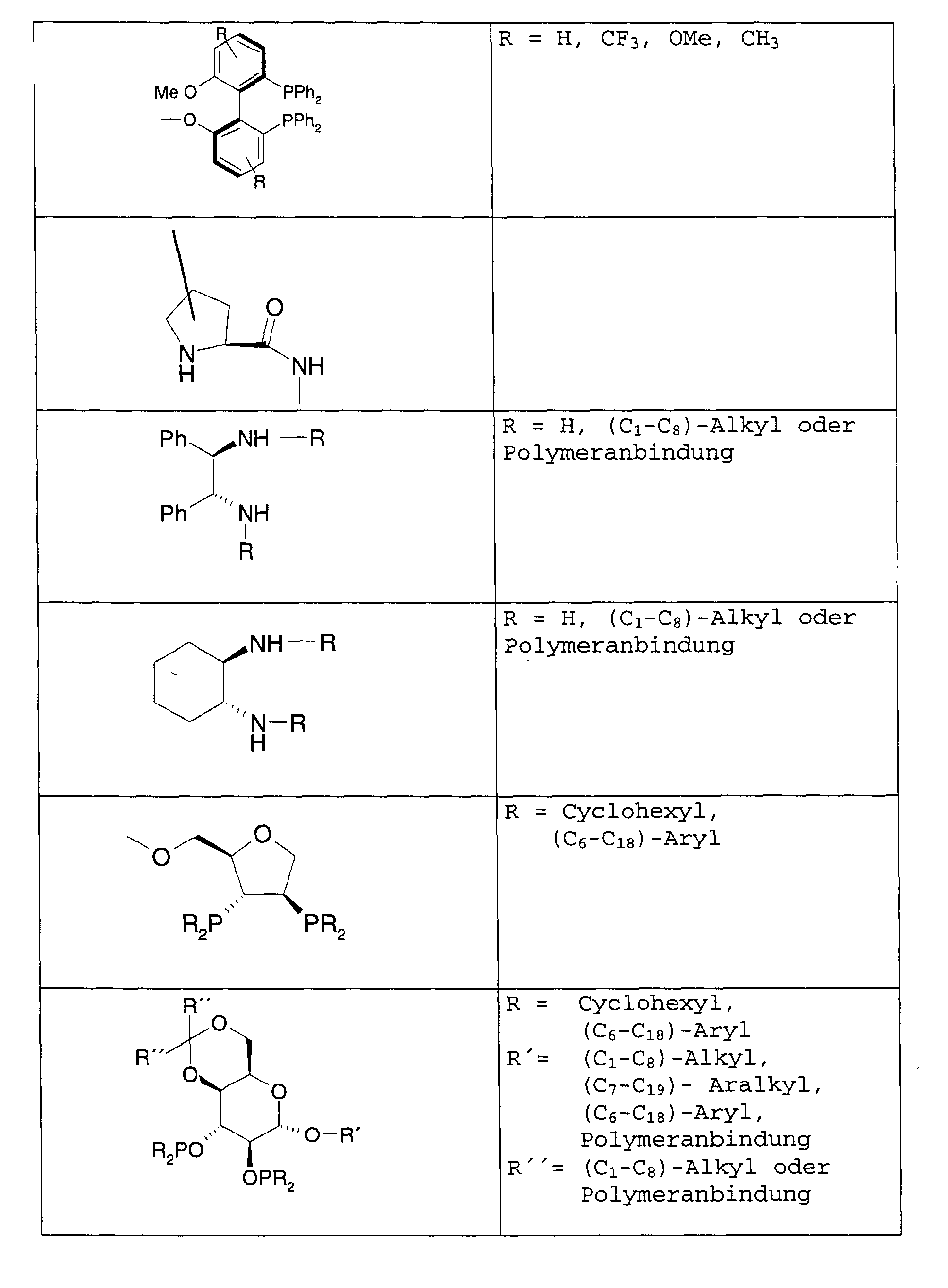 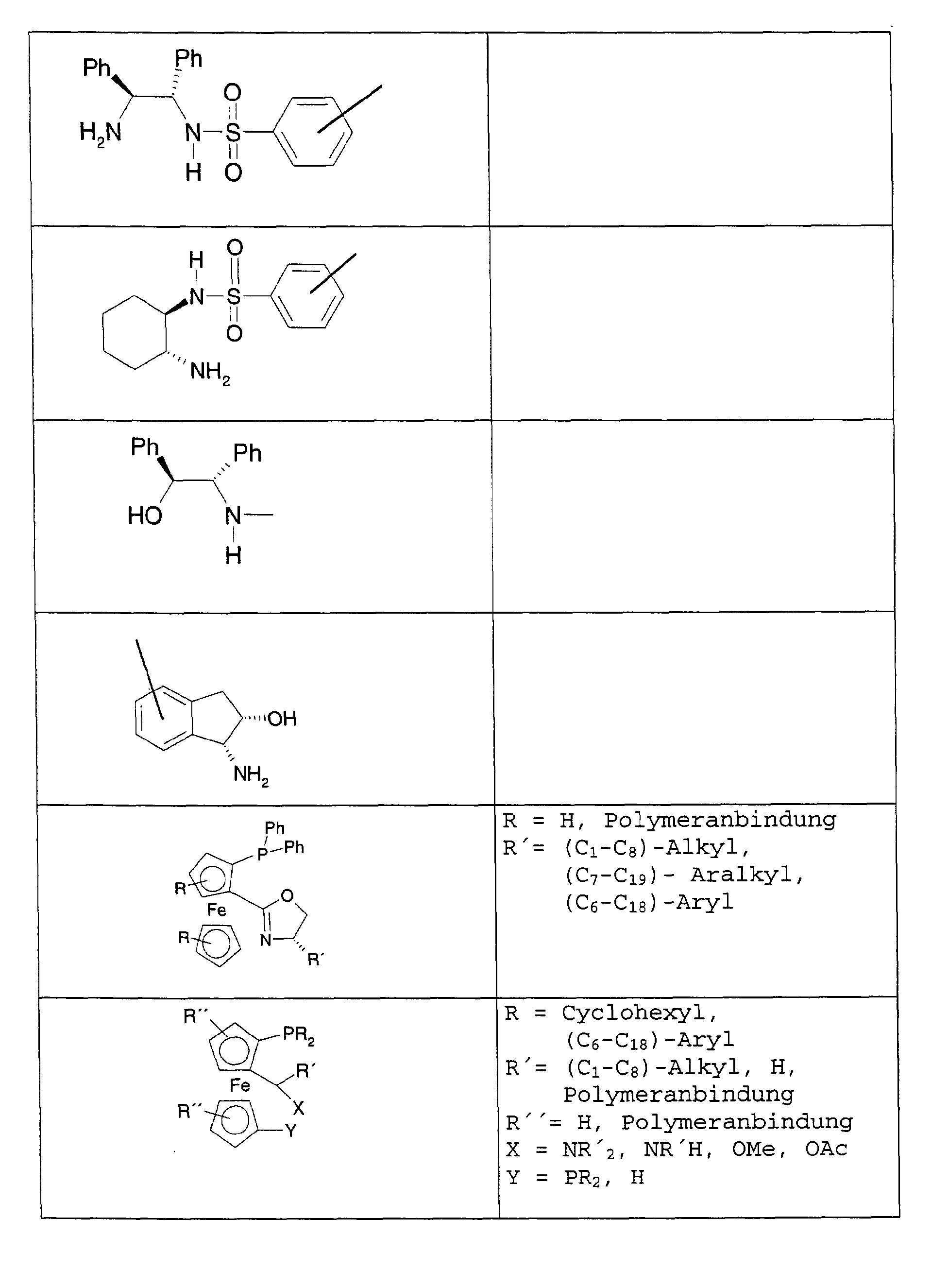 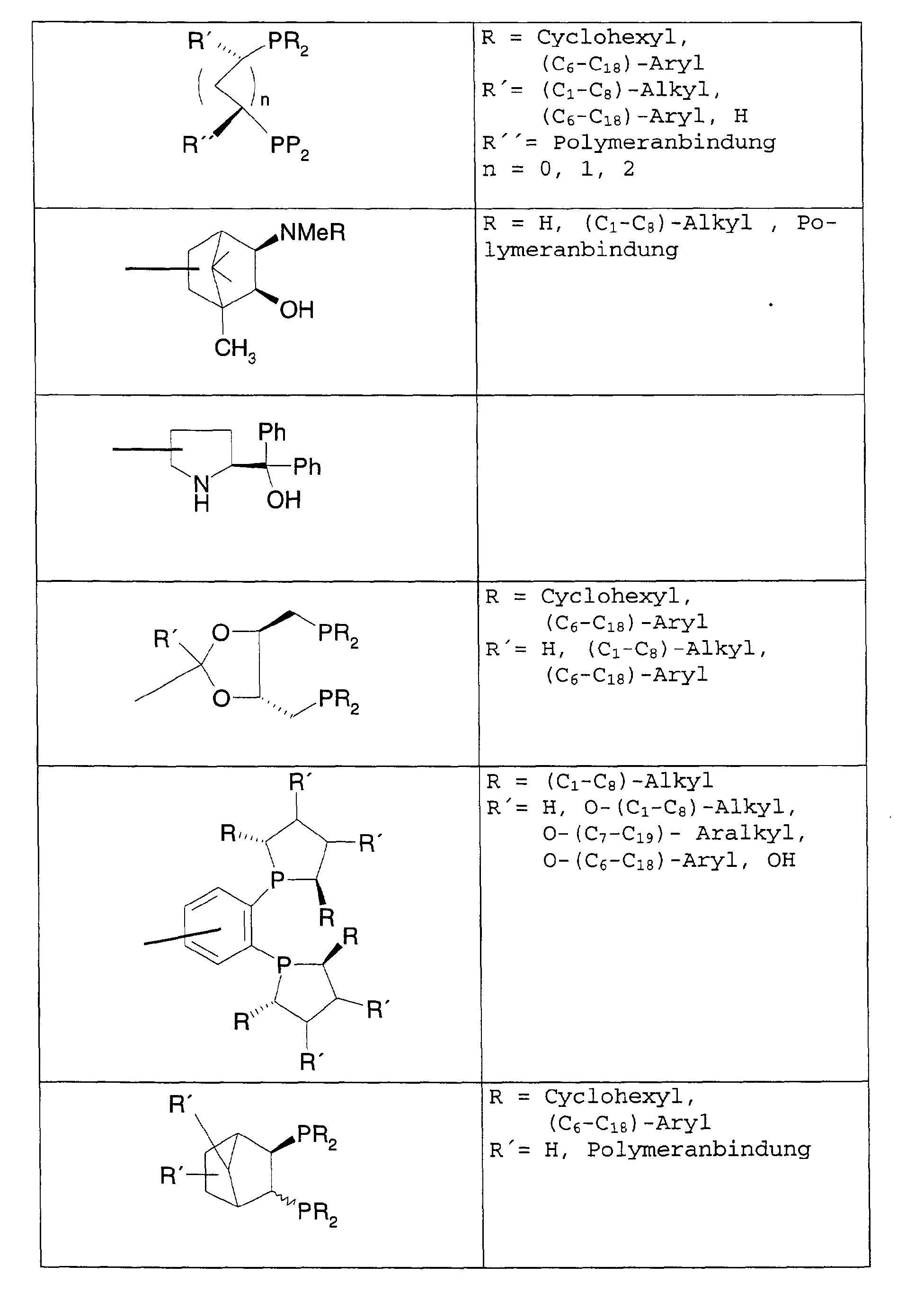 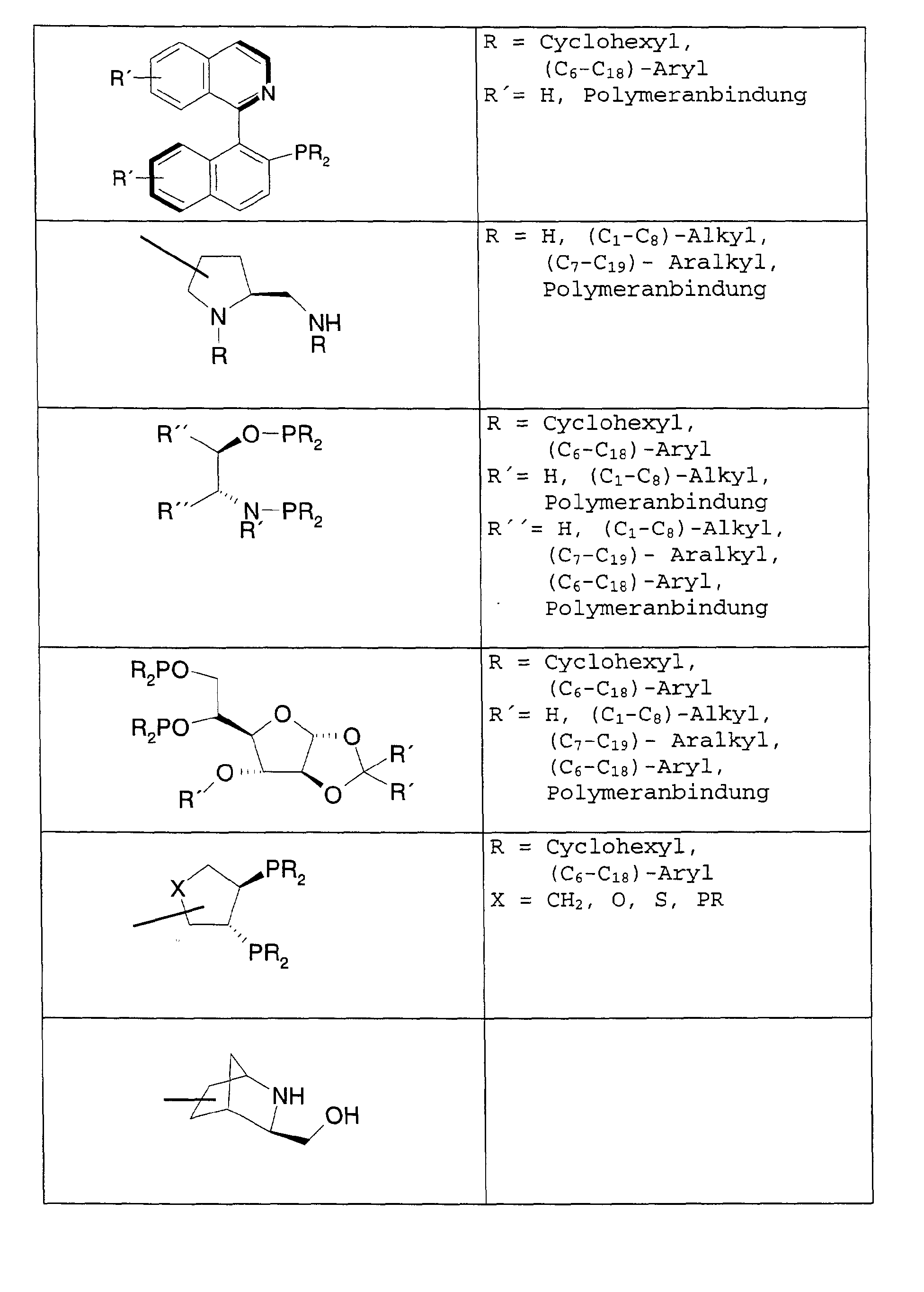 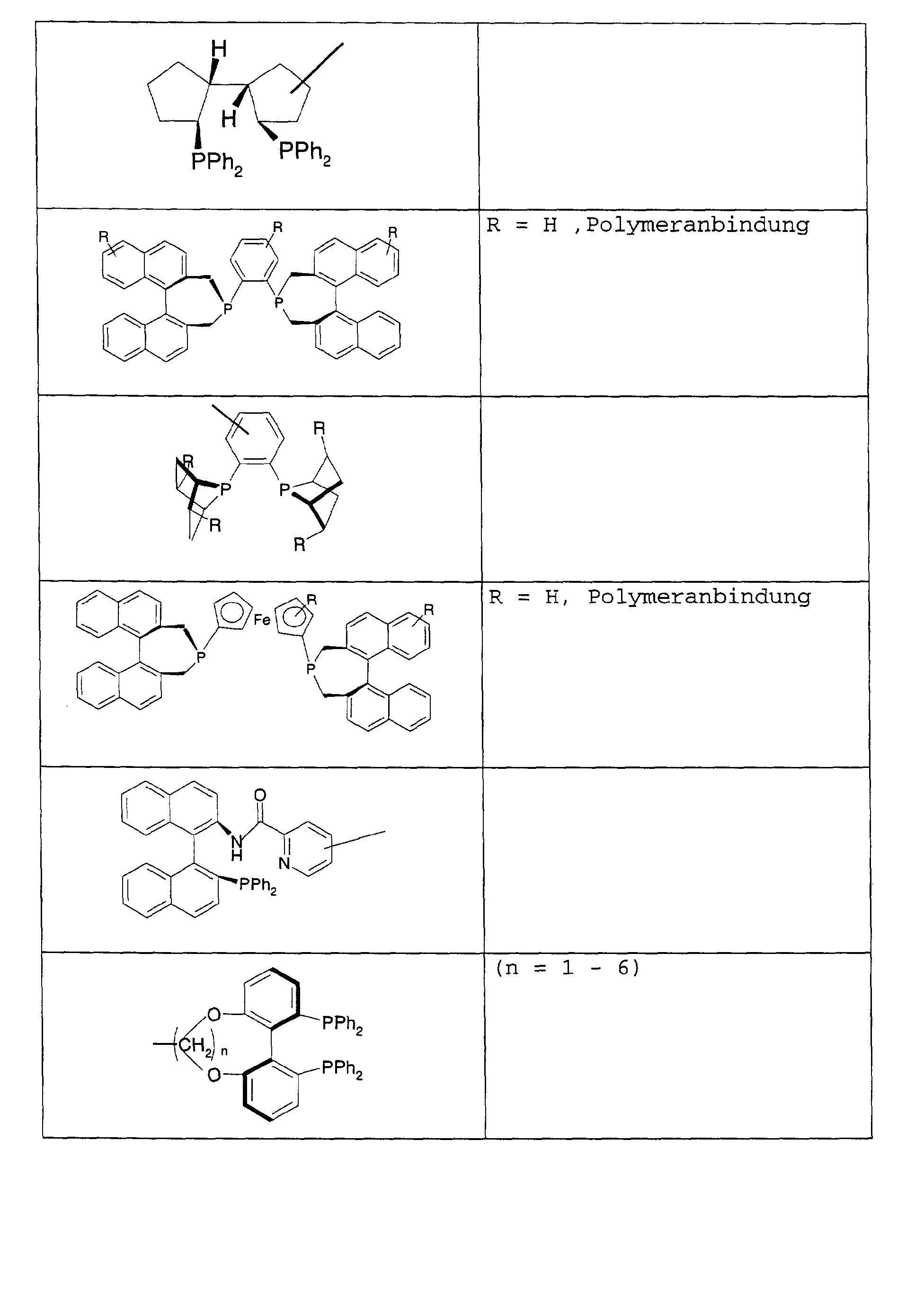 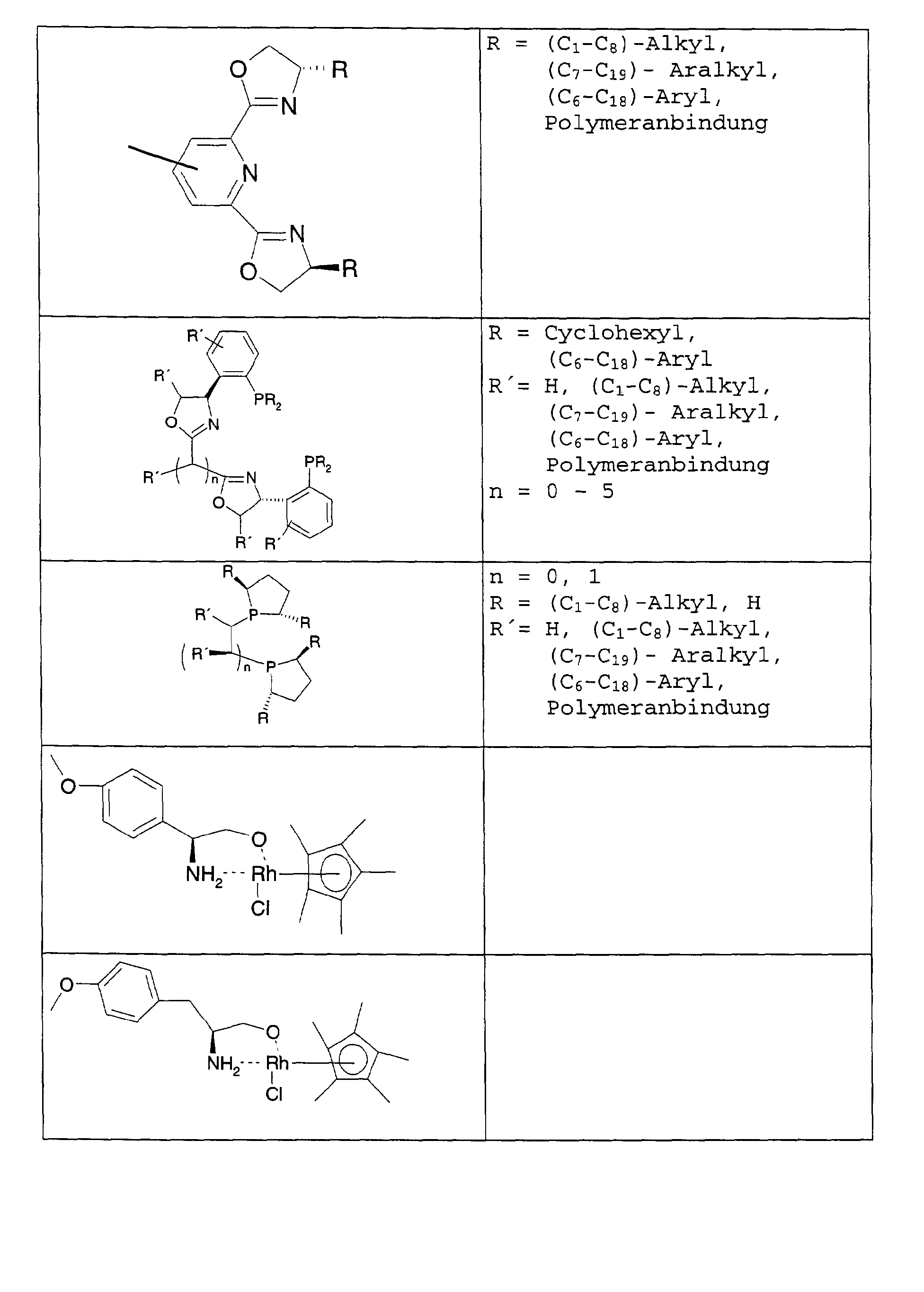 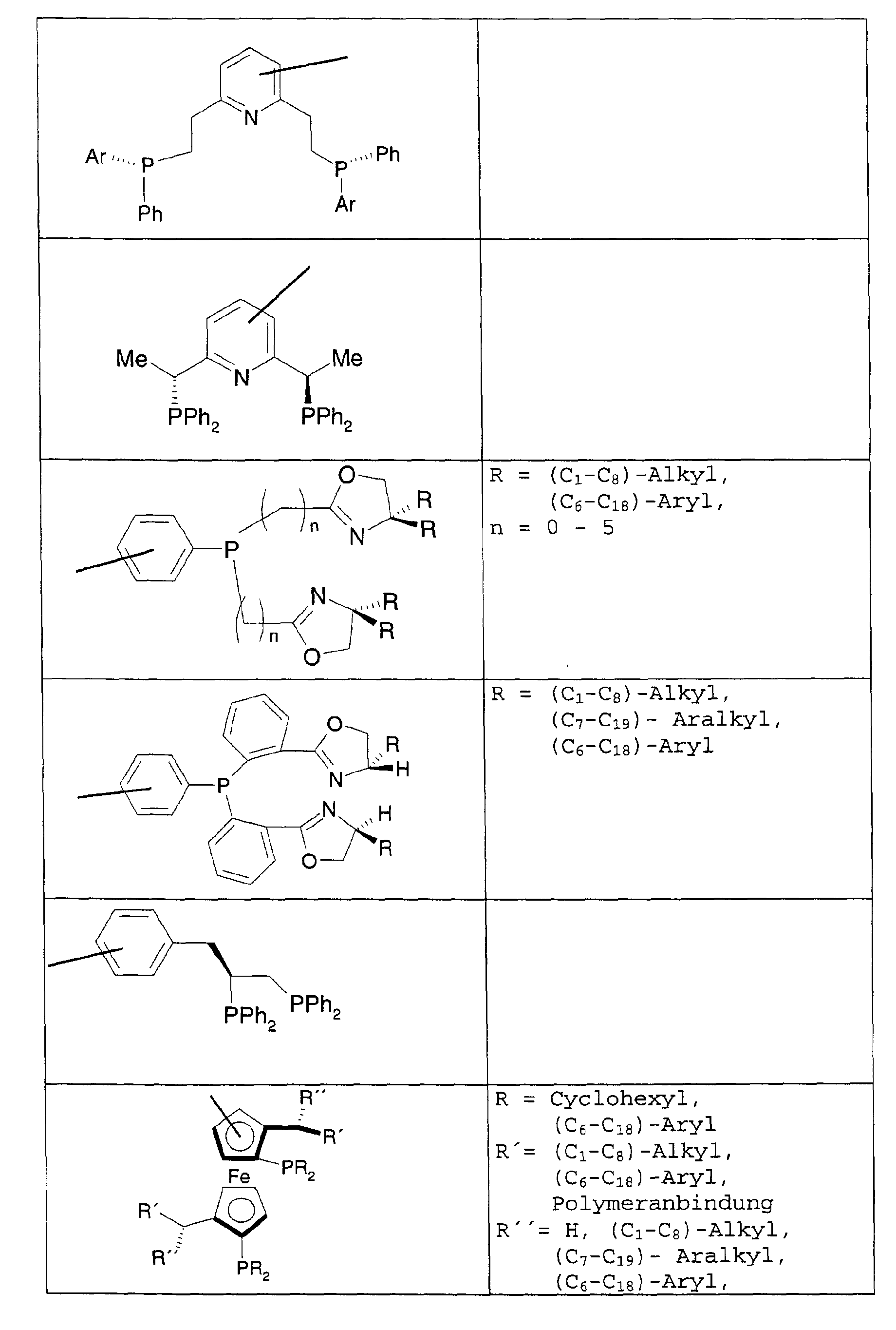 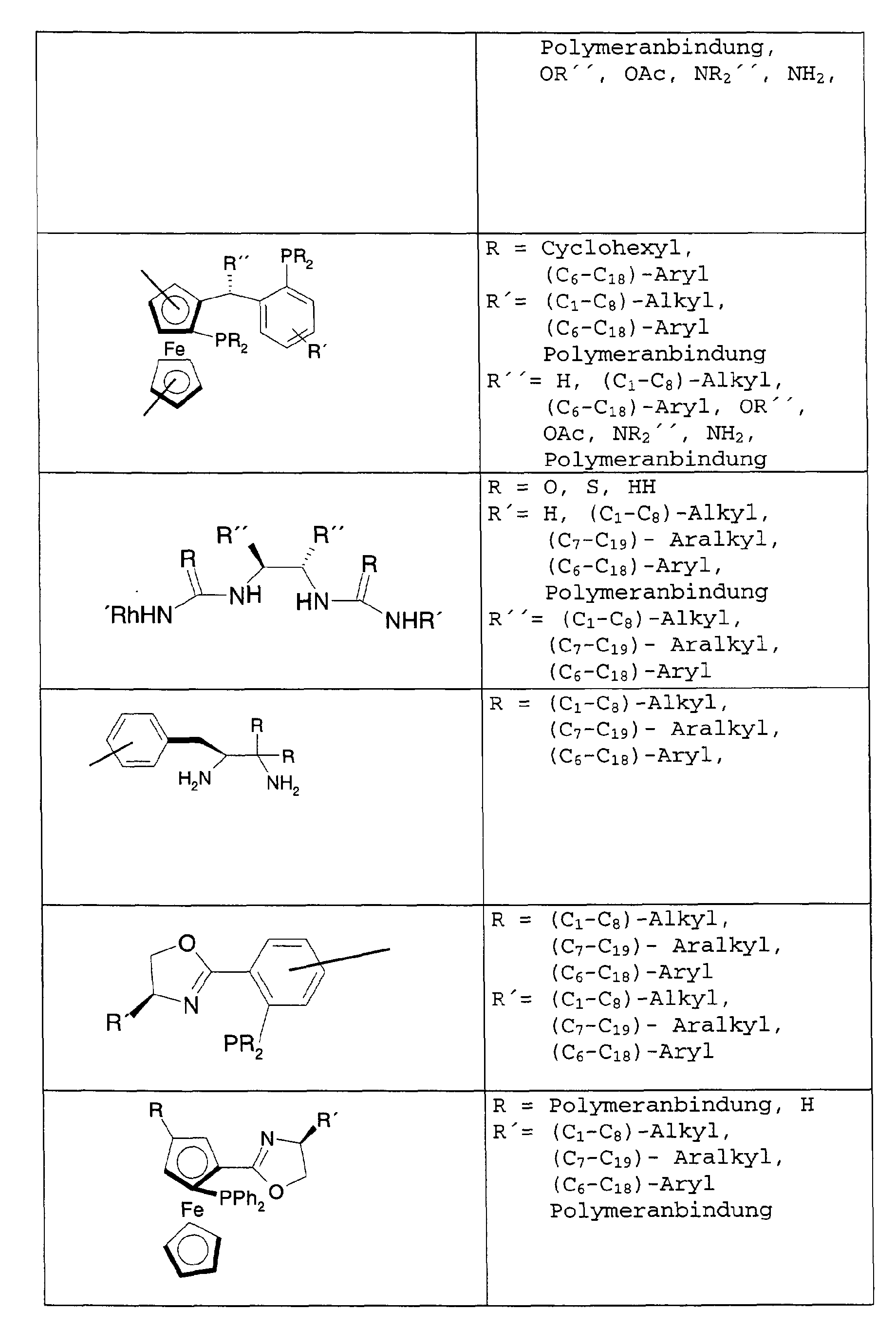 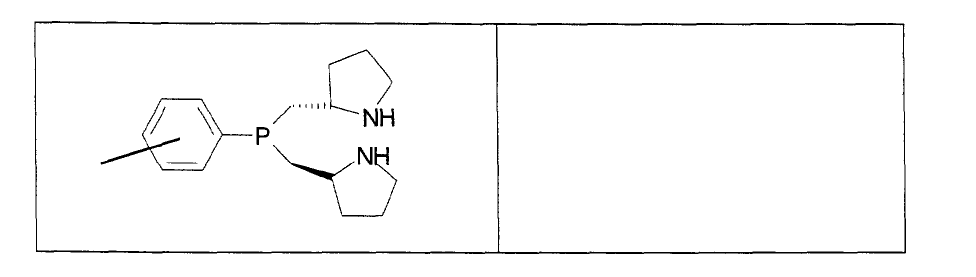 wobei diese Zentren über einen Linker ausgewählt aus der Gruppe
| | | |
|---|---|---|
| a) | - Si(R2)- | |
| b) | - (SiR₂-O)ₙ- | n=1-10000 |
| c) | - (CHR-CHR-O)ₙ- | n=1-10000 |
| d) | - (X)ₙ- | n=1-20 |
| e) | Z- (X)ₙ- | n=0-20 |
| f) | - (X)ₙ-W | n=0-20 |
| g) | Z- (X)ₙ-W | n=0-20 |
wobei
R bedeutet H, (C₁-C₈)-Alkyl, (C₆-C₁₈)-Aryl , (C₇-C₁₉)-Aralkyl, ((C₁-C₈)-Alkyl)₁₋₃-(C₆-C₁₈)-Aryl,
X bedeutet (C₆-C₁₈)-Arylen, (C₁-C₈)-Alkylen, (C₁-C₈)-Alkenylen, ((C₁-C₈)-Alkyl)₁₋₃-(C₆-C₁₈) -Arylen, (C₇-C₁₉)-Aralkylen,
Z bedeutet polymerseitig C(=O)O-, C(=O)NH-, C(=O)-, NR, O, CHR, CH₂, C=S, S, PR,
W bedeutet ligandenseitig C(=O)O-, C(=O)NH-, C(=O)-, NR, O, CHR, CH₂, C=S, S, PR,
oder direkt an das molekulargewichtsvergrößernde Polymer gebunden sind und das Molekulargewicht des polymeren Liganden > 1000 g/mol beträgt.

2. Ligand nach Anspruch 1,
dadurch gekennzeichnet, daß
die Molekulargewichtsvergrößerung durch Polyacrylate, Polyvinylpyrrolidinone, Polysiloxane, Polybutadiene, Polyisoprene, Polyalkane, Polystyrole, Polyoxazoline oder Polyether oder Mischungen derselben gebildet wird.

3. Ligand nach Anspruch 1 und/oder 2,
dadurch gekennzeichnet, daß
die Molekulargewichtsvergrößerung durch Polysiloxane, Polystyrole oder Polyacrylate gebildet wird.

4. Ligand nach einem oder mehreren der Ansprüche 1 bis 3,
dadurch gekennzeichnet, daß
dessen mittleres Molekulargewicht im Bereich von 1.000 - 1.000.000, vorzugsweise 5.000 - 300.000 g/mol liegt.

5. Ligand nach einem oder mehreren der vorhergehenden Ansprüche,
dadurch gekennzeichnet, daß
man als aktives Zentrum ein Bis-(3,4-diarylphosphinyl)-pyrrolidin einsetzt.

6. Verfahren zur Herstellung von Liganden nach Anspruch 1,
dadurch gekennzeichnet, daß man
a) das katalytisch aktive Zentrum mit angebundenem Linker oder direkt an ein Monomer bindet und dieses in Gegenwart nicht modifizierter Monomere polymerisiert,
b) das katalytisch aktive Zentrum über einen Linker oder direkt an das fertige Polymer bindet, oder
c) Polymere nach a) oder b) erstellt und diese mit anderen Polymeren copolymerisiert, welche katalytisch aktive Zentren aufweisen können.

7. Verwendung der Liganden nach Anspruch 1 zur Herstellung von enantiomer angereicherten organischen Verbindungen.

8. Verwendung nach Anspruch 7,
dadurch gekennzeichnet, daß
man in einem Membranreaktor arbeitet.

9. Verwendung nach Anspruch 7 und/oder 8,
dadurch gekennzeichnet, daß
man C=C-, C=N- oder C=O-Doppelbindungen hydriert.

10. Verwendung nach einem oder mehreren der Ansprüche 7 bis 9,
dadurch gekennzeichnet, daß
man mittels Transferhydrierung hydriert.

11. Molekulargewichtsvergrößerter Katalysator
dadurch gekennzeichnet, daß
er aus einem Liganden der Ansprüche 1-5 und Metallen oder Metallionen ausgewählt aus der Gruppe Ru, Rh, Ir, Pd, Ni, Pt, Co
aufgebaut ist.
